(19) Europäisches Patentamt
European Patent Office
Office européen des brevets

(11) **EP 4 556 548 A1**

(12) **EUROPEAN PATENT APPLICATION**
published in accordance with Art. 153(4) EPC

(43) Date of publication:
**21.05.2025 Bulletin 2025/21**

(21) Application number: 23838914.2

(22) Date of filing: **11.07.2023**

(51) International Patent Classification (IPC):
$C10G\ 45/08^{(2006.01)}$    $C10G\ 45/06^{(2006.01)}$
$B01J\ 37/08^{(2006.01)}$    $B01J\ 27/188^{(2006.01)}$

(52) Cooperative Patent Classification (CPC):
**B01J 27/188; B01J 37/08; C10G 45/06;
C10G 45/08**

(86) International application number:
**PCT/CN2023/106677**

(87) International publication number:
**WO 2024/012422 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 12.07.2022  CN 202210814406
12.07.2022  CN 202210813950
12.07.2022  CN 202210814381

(71) Applicants:
• **China Petroleum & Chemical Corporation
Beijing 100728 (CN)**
• **Sinopec Research Institute of Petroleum
Processing Co., Ltd.
Beijing 100083 (CN)**

(72) Inventors:
• **CHEN, Wenbin
Beijing 100083 (CN)**

• **NIE, Hong
Beijing 100083 (CN)**
• **LI, Mingfeng
Beijing 100083 (CN)**
• **ZHANG, Yubai
Beijing 100083 (CN)**
• **LIU, Qinghe
Beijing 100083 (CN)**
• **LI, Dadong
Beijing 100083 (CN)**
• **XI, Yuanbing
Beijing 100083 (CN)**
• **JU, Xueyan
Beijing 100083 (CN)**
• **DING, Shi
Beijing 100083 (CN)**

(74) Representative: **karo IP
Patentanwälte PartG mbB
Steinstraße 16-18
40212 Düsseldorf (DE)**

(54) **HYDROGENATION CATALYST, PREPARATION METHOD THEREFOR, AND USE THEREOF**

(57)    The present invention discloses a hydrogenation catalyst, and preparation and use thereof. The catalyst comprises a support and a hydrogenation active metal component, a phosphorus component and an organic complexing component supported on the support, wherein the hydrogenation active metal component comprises a Group VIII metal and a Group VIB metal, the organic complexing component comprises an alcohol, and further comprises a carboxylic acid and/or an amine, and the catalyst has a spectrum obtained by a temperature-programmed oxidation test exhibiting at least two $CO_2$ release peaks, wherein the temperature corresponding to the first release peak is in the range of 200-300°C, the temperature corresponding to the second release peak is in the range of 300-400°C, and the ratio of the peak height of the first release peak to the peak height of the second release peak is in the range of 0.5-5:1. The catalyst exhibits high catalytic activity and is particularly suitable for the hydrofining process of distillate oil.

FIG. 1

**Description**

**TECHNICAL FIELD**

The present application relates to the technical field of distillate oil hydrofining, and in particular to a hydrogenation catalyst, and preparation and use thereof.

**BACKGROUND ART**

Driven by the "dual-carbon" strategy, traditional refining technologies are under immense pressure. As the core unit of clean diesel production, the low-carbon and efficient operation of the diesel hydrogenation unit is of great significance. Ultra-deep hydrodesulphurization of diesel requires harsh operating conditions, and is accompanied by aromatic saturation reactions that consume substantial amounts of hydrogen. Typical diesel hydrogenation unit operates at pressures ranging from 5-8MPa, and requires large hydrogen circulation volumes and high energy consumption to maintain operation. Therefore, it is necessary to further reduce the energy consumption and hydrogen consumption during the reaction process to meet the demands of low-carbon and efficient production. The linchpin of the technology lies in developing catalyst technology that can efficiently perform HDS in low-energy consumption mode, thereby satisfying the need to decrease both energy and hydrogen consumption.

The active metals in diesel hydrodesulphurization catalysts are primarily composed of Group VIB metals (Mo and/or W) and Group VIII metals (Co and/or Ni). The patent application with application No. 202010395989.6 discloses a hydrofining catalyst, preparation method and use thereof. The catalyst includes 50-80wt% support and 20-50wt% active metal component(s). A composite oxide is used in the support to regulate the interaction force between the active metal(s) and the support in the catalyst, thereby increasing the concentration of active hydrogen species on the surface of the active metal(s) and improving the hydrodesulphurization performance of the catalyst. The patent application with application No. 201610388357.0 discloses a hydrodesulphurization catalyst, which includes a composite support of NiO, $MoO_3$ and $WO_3$ as well as AlOOH and $TiO_2$. It is a slurry catalyst with high reaction activity and good stability synthesized by a complete liquid-phase method.

Meanwhile, low-quality diesel is rich in aromatics, which can be converted to produce high-value gasoline or light aromatics. During the processing of low-quality diesel, it is generally necessary to remove nitrogen compounds therein through the hydrofining unit to facilitate subsequent cracking process. The catalyst of the hydrofining unit should exhibit relatively high hydrodenitrogenation activity and stability. However, current hydrofining catalysts lack sufficient hydrodenitrogenation activity and stability, and need to be further improved to meet the demands of low-energy consumption and long-term cycle.

The patent application with application No. 202011116861.8 discloses a method for preparing a heavy diesel fraction hydrofining catalyst, which involves first preparing a Ni, Al, W-containing filter cake through a gelling reaction, then mixing the filter cake with a Ni, Al mixed solution to obtain a solid-liquid mixture, and concurrently introducing this mixture into a reaction tank with a sodium molybdate solution and a precipitant for carrying out a gelling reaction. After aging, the product is subjected to solid-liquid separation, drying, and molding, the molded product undergoes is desalted, washed, dried and calcined to obtain the hydrofining catalyst. The patent application with application No. 202010395989.6 discloses a hydrofining catalyst, preparation method and use thereof. The catalyst includes 50-80wt% support and 20-50wt% active metal component(s); wherein, the support is an $Al_2O_3$-containing composite oxide. The patent application with application No. 201910297435.X discloses a hydrofining catalyst, which includes a total transition metal phosphide content of 40-85%, an aluminum oxide content of 5-35%, a magnesium content of 2-18% calculated as magnesium oxide, and a zirconium content of 1-16% calculated as zirconium oxide. The patent application with application No. 201810965384.9 discloses a diesel hydrodenitrogenation catalyst, wherein the support used therein includes γ-$Al_2O_3$, $ZrO_2$ and $La_2O_3$, and the support is a multi-level porous composite support prepared with polyamide-amine type dendrimer as a pore-forming agent, and the active component(s) is/are supported on the support by one or more impregnations. The patent application with application No. 201811455219.5 discloses a method for preparing a supported hydrogenation catalyst using one or more of the group consisting of sodium ethylenediaminetetramethylene phosphate, tetrabutylammonium fluoride and tartaric acid as an active metal positioning and loading director, and a γ-$Al_2O_3$ support is contacted with a solution containing the active metal positioning and loading director to prepare the catalyst.

In addition, the implementation of the "dual-carbon" strategy requires further reduction in the energy consumption of diesel hydrogenation units. Under low-carbon and low-energy consumption operating conditions, higher requirements are placed on the activity, stability and hydrogen consumption of diesel hydrogenation catalysts. However, it is challenging for a single catalyst to simultaneously meet the demands of low-carbon and long-term stable production. Thus, selecting an appropriate catalyst grading system has become one of the critical solutions. Existing diesel hydrogenation catalyst grading systems exhibit insufficient performance or are overly complex, which makes it difficult to meet the demands of low-carbon and high-efficiency diesel hydrogenation.

There remains a need in this field to develop hydrogenation catalysts and grading systems with better catalytic performance, such as catalytic activity, catalyst stability and hydrogen consumption.

**SUMMARY**

The purpose of the present application is to provide a novel hydrogenation catalyst, and preparation and use thereof. The hydrogenation catalyst exhibits high catalytic performance and is particularly suitable for the hydrogenation refining process of distillate oil.

In order to achieve the above-mentioned purpose, in one aspect, the present application provides a hydrogenation catalyst, comprising a support and a hydrogenation active metal component, a phosphorus component and an organic complexing component supported on the support, wherein the hydrogenation active metal component comprises a Group VIII metal and a Group VIB metal, the organic complexing component comprises an alcohol, and further comprises a carboxylic acid and/or an amine, and the catalyst has a spectrum obtained by a temperature-programmed oxidation test exhibiting at least two $CO_2$ release peaks, wherein the temperature corresponding to the first release peak is in the range of 200-300°C, the temperature corresponding to the second release peak is in the range of 300-400°C, and the ratio of the peak height of the first release peak to the peak height of the second release peak is in the range of 0.5-5:1.

In another aspect, provided is a method for preparing the hydrogenation catalyst of the present application, comprising steps of:

1) providing a catalyst support; and
2) supporting a Group VIII metal precursor, a Group VIB metal precursor, a phosphorus-containing compound and the organic complexing component on the catalyst support by impregnation, followed by drying to obtain the hydrogenation catalyst.

In still another aspect, the present application provides a method for grading hydrogenation catalysts, comprising: sequentially loading a first hydrogenation catalyst and a second hydrogenation catalyst along a direction of material flow, wherein the first hydrogenation catalyst is the hydrogenation catalyst according to the present application, wherein the Group VIII metal is nickel or a combination of nickel with at least one of iron, ruthenium and osmium, and the atomic ratio of nickel to the total amount of the Group VIII metal(s) is in the range of 0.8-1:1; the second hydrogenation catalyst is the hydrogenation catalyst according to the present application, wherein the Group VIII metal is cobalt or a combination of cobalt with one or more other Group VIII metal(s), and the atomic ratio of cobalt to the total amount of the Group VIII metal(s) is in the range of 0.8-1:1, and the loading volume ratio of the first hydrogenation catalyst to the second hydrogenation catalyst is from 1:2 to 5:1.

In still another aspect, the present application provides a method for hydrofining distillate oil, comprising a step of contacting the distillate oil with the hydrogenation catalyst of the present application in the presence of hydrogen to carry out a reaction, wherein the hydrogenation catalyst is subjected to sulphurization treatment before use.

In yet another aspect, the present application provides a hydrogenation catalyst graded system, comprising a first hydrogenation catalyst and a second hydrogenation catalyst, wherein the first hydrogenation catalyst is the hydrogenation catalyst according to the present application, wherein the Group VIII metal is nickel or a combination of nickel with at least one of iron, ruthenium and osmium, and the atomic ratio of nickel to the total amount of the Group VIII metal(s) is in the range of 0.8-1:1; the second hydrogenation catalyst is the hydrogenation catalyst according to the present application, wherein the Group VIII metal is cobalt or a combination of cobalt with one or more other Group VIII metal(s), and the atomic ratio of cobalt to the total amount of the Group VIII metal(s) is in the range of 0.8-1:1, and the loading volume ratio of the first hydrogenation catalyst to the second hydrogenation catalyst is from 1:2 to 5:1.

The hydrogenation catalyst of the present application can significantly improve the dispersion of active metal components in the catalyst and strengthen the synergistic effect between different hydrogenation active metals by combining the use of two different types of hydrogenation active metals, two corresponding different types of organic complexing components that match them, and a phosphorus component, thereby significantly improving the activity and stability of the catalyst.

The method for grading hydrogenation catalysts of the present application combines two specific hydrogenation catalysts to iMPart the reaction system with excellent activity and stability. When applied in the clean production of diesel, especially for treating distillate oil with a secondary processed diesel percentage of 10-30 wt%, it can give full play to the grading effect of the two catalysts, effectively remove sulfur and aromatics from the distillate oil, and simultaneously achieve lower reaction hydrogen consumption, and thus has potential industrial value.

Additional features and advantages of the present application will be described in detail in the subsequent detailed description section.

## BRIEF DESCRIPTION OF THE DRAWINGS

The accompanying drawings are provided for a further understanding of the present application and constitute a part of the specification. Together with the following specific embodiments, they are used to explain the present application but do not constitute a limitation to the present application. In the accompanying drawings:

FIG. 1 is a $CO_2$ release spectrum from a temperature-programmed oxidation test of the catalyst obtained in Example I-1.
FIG. 2 is a $CO_2$ release spectrum from a temperature-programmed oxidation test of the catalyst obtained in Comparative Example I-1.
FIG. 3 is a $CO_2$ release spectrum from a temperature-programmed oxidation test of the catalyst obtained in Example II-1.

## DETAILED DESCRIPTION

The following provides a detailed description of the specific embodiments of the present application in conjunction with the accompanying drawings. It should be understood that the specific embodiments described herein are only used to illustrate and explain the present application, and are not used to limit the present application.

The specific embodiments of the present application are described in detail below. It should be understood that the specific embodiments described herein are only used to illustrate and explain the present application, and are not used to limit the present application.

Any specific numerical value disclosed herein (including endpoints of ranges of numerical values) is not to be limited to the precise value of that numerical value, and is to be understood to also encompass values close to the precise value, for example, all possible values within ±5% of the precise value. Also, for the disclosed ranges of numerical values, one or more new ranges of numerical values can be obtained by any combination between the endpoint values of the range, between the endpoint values and specific point values within the range, and between each specific point values, and such new ranges of numerical values should also be considered to be specifically disclosed herein.

Unless otherwise indicated, the terms used herein have the same meanings as commonly understood by those skilled in the art. If a term is defined herein and its definition is different from the common understanding in the art, the definition herein shall prevail.

In the present application, anything or matters not mentioned are directly applicable to aspects known in the art without any changes except for the contents explicitly stated. Moreover, any embodiment described herein may be freely combined with one or more other embodiments described herein, and the technical solutions or concepts formed thereby are deemed to be part of the original disclosure or original description of the present application, and should not be considered as new matters not disclosed or contemplated herein, unless such combination is considered clearly unreasonable by those skilled in the art.

In the present application, the "secondary processed diesel" includes but is not limited to catalytic diesel and coking diesel, etc.

In the present application, the "dry weight" of the catalyst refers to the weight of the catalyst after calcination at 400°C.

In the present application, the temperature corresponding to the first release peak being in the range of 200-300°C means that the peak value of the first release peak appeared at a specific temperature value between 200-300°C, and the temperature corresponding to the second release peak being in the range of 300-400°C means that the peak value of the second release peak appeared at a specific temperature value between 300-400°C. In the present application, it can be understood that the $CO_2$ release peak temperature may have an error of ± 2°C.

In the present application, "ratio of the peak height" refers to the ratio of the peak height of the first release peak to the peak height of the second release peak, that is, ratio of the peak height = peak height of the first release peak / peak height of the second release peak.

In this application, $CO_2$ release peak is analyzed on a NETZSCH STA 409 PC/PG instrument. The catalyst to be tested is heated in an air atmosphere (at a heating rate of 10°C/min), and is monitored at the gas outlet of the instrument by a mass spectrometer to obtain a curve of the $CO_2$ produced by catalyst decomposition as a function of temperature.

In the present application, the specific surface area, pore volume, pore diameter and pore distribution of the alumina support are measured by low-temperature nitrogen adsorption method (BET) and mercury porosimetry (referring to ASTM D3663, ASTM D4641, GB/T 21650.1-2008 standard), wherein the pore structure properties within 2-100 nm are calculated based on the results of the BET method, and the pore structure properties within 100-300 nm are calculated based on the measurement results of the mercury porosimetry.

All patent and non-patent literature, including but not limited to textbooks and journal articles, mentioned herein are incorporated herein by reference in their entirety.

As described above, in a first aspect, the present application provides a hydrogenation catalyst comprising a support and a hydrogenation active metal component, a phosphorus component and an organic complexing component supported on the support, wherein the hydrogenation active metal component comprises a Group VIII metal and a Group VIB metal, the organic complexing component comprises an alcohol, and further comprises a carboxylic acid and/or an amine, and the catalyst has a spectrum obtained by a temperature-programmed oxidation test exhibiting at least two $CO_2$ release peaks, wherein the temperature corresponding to the first release peak is in the range of 200-300°C, preferably 220-280°C, the temperature corresponding to the second release peak is in the range of 300-400°C, preferably 320-380°C, and the ratio of the peak height of the first release peak to the peak height of the second release peak is in the range of 0.5-5:1, preferably 0.7-3.5:1.

In a preferred embodiment, based on the dry weight of the catalyst and calculated as oxides, the catalyst has a content of the Group VIII metal in the range of 1-15 wt%, preferably 2-12 wt%, more preferably 3-8 wt%, a content of the Group VIB metal in the range of 12-50 wt%, preferably 15-45 wt%, more preferably 18-40 wt%, and a content of phosphorus, calculated as $P_2O_5$, in the range of 3-10 wt%, preferably 3.5-9 wt%, more preferably 4-8 wt%.

In a preferred embodiment, in the catalyst, the molar ratio of the alcohol to the Group VIB metal is in the range of 0.2-4:1, preferably 0.3-3.5:1, and the molar ratio of the total amount of the carboxylic acid and the amine to the Group VIII metal is in the range of 0.1-4:1, preferably 0.2-3.5:1.

In a preferred embodiment, in the catalyst, the atomic ratio of the Group VIII metal to the total amount of the Group VIII metal and the Group VIB metal is in the range of 0.1-0.5:1, more preferably 0.2-0.35:1.

In a preferred embodiment, the Group VIII metal is selected from iron, cobalt, nickel, ruthenium, rhodium, palladium, osmium, or any combinations thereof, and the Group VIB metal element is selected from chromium, molybdenum, tungsten, or any combinations thereof.

In the present application, the type of organic alcohol compound is selected from a wide range, and conventional organic alcohol compounds in the art are applicable to the present application. Preferably, the organic alcohol compound is selected from at least one of monohydric alcohols, dihydric alcohols and polyhydric alcohols. In a preferred embodiment, the alcohol is selected from butanol, isobutanol, pentanol, heptanol, ethylene glycol, glycerol, tetramethylene glycol, polyethylene glycol, polyglycerol, pentaerythritol, xylitol, trimethylolethane, or any combinations thereof, preferably selected from butanol, glycerol, propanol, ethylene glycol, or any combinations thereof.

In the present application, there is no specific restriction on the type of carboxylic acid compound. In a preferred embodiment, the carboxylic acid is selected from acetic acid, propionic acid, citric acid, caprylic acid, adipic acid, malonic acid, succinic acid, maleic acid, valeric acid, caproic acid, capric acid, benzoic acid, phenylacetic acid, phthalic acid, terephthalic acid, octadecanoic acid, tartaric acid, or any combinations thereof, preferably selected from citric acid, acetic acid, or any combinations thereof.

In the present application, there is no specific restriction on the type of organic amine compound. In a preferred embodiment, the amine is selected from ethylenediamine, ethylenediaminetetraacetic acid, ethanolamine, triethanolamine, cyclohexanediaminetetraacetic acid, or any combinations thereof, more preferably triethanolamine and/or cyclohexanediaminetetraacetic acid.

In a preferred embodiment, the support is an alumina support, preferably the alumina support has a water absorption rate of more than 0.9 mL/g, a specific surface area of more than 260 $m^2$/g, and an average pore diameter of more than 8 nm. Further preferably, the alumina support contains phosphorus, and the phosphorus content in the alumina support, calculated as $P_2O_5$, accounts for 10-40 wt%, more preferably 20-30 wt%, of the total phosphorus content in the catalyst. The inventors of the present application have found that the introduction of some phosphorus elements into the support can improve the dispersion of the active metal components and significantly improve the activity of the catalyst.

In a preferred embodiment, the equivalent diameter of the catalyst is in the range of 0.5-1.8 mm, preferably 0.8-1.6 mm. Further preferably, the shape of the catalyst is cylindrical, trilobal, quadrilobal, butterfly, honeycomb or other irregular shapes.

In certain preferred embodiments, the Group VIII metal is nickel or a combination of nickel with at least one of iron, ruthenium and osmium, and the atomic ratio of nickel to the total amount of the Group VIII metal(s) is in the range of 0.8-1:1, preferably 0.85-1:1.

In a further preferred embodiment, in the spectrum obtained by the temperature-programmed oxidation test of the catalyst, the temperature corresponding to the first release peak is in the range of 210-280°C, the temperature corresponding to the second release peak is in the range of 320-380°C, and the ratio of the peak height of the first release peak to the peak height of the second release peak is in the range of 0.5-4:1. Even more preferably, in the spectrum obtained by the temperature-programmed oxidation test of the catalyst, the temperature corresponding to the first release peak is in the range of 230-260°C, the temperature corresponding to the second release peak is in the range of 320-360°C, and the ratio of the peak height of the first release peak to the peak height of the second release peak is in the range of 0.7-3.5:1.

In a further preferred embodiment, the pore volume of pores in the catalyst with a pore diameter in the range of 100-300 nm accounts for no more than 20%, preferably 5-20%, of the total pore volume of the catalyst.

In a further preferred embodiment, in the catalyst, the molar ratio of the alcohol to the Group VIB metal is in the range of 0.2-4:1, preferably 0.5-2.5:1, more preferably 0.6-2.2:1, and the molar ratio of the total amount of the carboxylic acid and the amine to the Group VIII metal is in the range of 0.3-1.5:1, preferably 0.4-1.2:1, more preferably 0.5-1.1:1.

In certain preferred embodiments, the Group VIII metal is cobalt or a combination of cobalt with one or more other Group VIII metal(s), and the atomic ratio of cobalt to the total amount of Group VIII metal(s) is in the range of 0.8-1:1, preferably 0.85-1:1.

In a further preferred embodiment, in the spectrum obtained by the temperature programmed oxidation test of the catalyst, the ratio of the peak height of the first release peak to the peak height of the second release peak is in the range of 1-5:1. Even more preferably, in the spectrum obtained by the temperature programmed oxidation test of the catalyst, the temperature corresponding to the first release peak is in the range of 220-280°C, the temperature corresponding to the second release peak is in the range of 320-380°C, and the ratio of the peak height of the first release peak to the peak height of the second release peak is in the range of 1.5-3:1.

In a further preferred embodiment, in the catalyst, the molar ratio of the alcohol to the Group VIB metal is in the range of 0.2-4:1, preferably 0.3-3.5:1, more preferably 0.8-2.5:1, and the molar ratio of the total amount of the carboxylic acid and the amine to the Group VIII metal is in the range of 0.1-4:1, preferably 0.2-3.5:1, more preferably 0.5-3:1.

The following is a further detailed description of two particularly preferred embodiments of the hydrogenation catalyst of the present application. Unless otherwise expressly stated, the above disclosure is also applicable to the catalysts of these two preferred embodiments, and thus will not be elaborated:

**The first preferred embodiment**

According to the first preferred embodiment, the hydrogenation catalyst comprises at least one metal element(s) of Group VIB, at least one metal element(s) of Group VIII as a co-active component, phosphorus element, a support, and an organic complexing component comprising an alcohol and at least one selected from a carboxylic acid and an amine, wherein:

the co-active component includes nickel, and optionally at least one of iron, ruthenium and osmium;
the pore volume of pores with a pore diameter in the range of 100-300 nm of the catalyst accounts for no more than 20% of the total pore volume of the catalyst; and
the catalyst has a spectrum obtained by a temperature-programmed oxidation test exhibiting at least two $CO_2$ release peaks, the temperature corresponding to the first release peak is in the range of 210-280°C, the temperature corresponding to the second release peak is in the range of 320-380°C, and the ratio of the peak height of the first release peak to the peak height of the second release peak is in the range of 0.5-4:1.

The inventors of the present application have found in their research that, in the catalyst of the first preferred embodiment, the use of nickel and phosphorus elements in combination with alcohol and carboxylic acid/ amine can significantly improve the activity of the hydrogenation catalyst. Furthermore, when the pore volume of pores with a pore diameter in the range of 100-300 nm of the hydrogenation catalyst accounts for no more than 20% of the total pore volume of the catalyst, it is beneficial to further improve the activity and stability of the hydrogenation catalyst, making the catalyst particularly suitable for the hydrogenation treatment of distillate oils with a proportion of secondary processed diesel in the range of 20-70 wt% in the distillate oils to be treated, and can effectively remove nitrogen from the distillate oils to be treated, meeting the demands of processing low-quality diesel.

In a further preferred embodiment, based on the dry weight of the catalyst and calculated as oxides, the content of the co-active component is in the range of 1-15 wt%, more preferably 2-12 wt%, even more preferably 3-8 wt%; the content of the metal element(s) of Group VIB is in the range of 12-50 wt%, preferably 15-40 wt%, more preferably 20-35 wt%. The advantage of adopting this preferred embodiment is that the catalyst exhibits higher activity and stability.

In a further preferred embodiment, the atomic ratio of nickel to the total amount of the co-active component is no less than 0.8:1, preferably 0.85-1:1. The advantage of adopting this preferred embodiment is that the denitrification performance of the catalyst is improved.

In a further preferred embodiment, the phosphorus content in the catalyst, calculated as $P_2O_5$, is in the range of 3-10 wt%, more preferably 3.5-9 wt%, and even more preferably 4-8 wt%. The advantage of adopting this preferred embodiment is that the catalyst exhibits higher activity.

In a further preferred embodiment, in the spectrum obtained by the temperature-programmed oxidation test of the catalyst, the temperature corresponding to the first $CO_2$ release peak is in the range of 230-260°C, the temperature corresponding to the second $CO_2$ release peak is in the range of 320-360°C, and the ratio of the peak height of the first release peak to the peak height of the second release peak is in the range of 0.7-3.5:1. The advantage of adopting this preferred embodiment is that the catalyst can maintain higher activity and stability.

In a further preferred embodiment, the pore volume of pores with a pore diameter in the range of 100-300 nm of the catalyst accounts for 5-20%, more preferably 8-15% of the total pore volume of the catalyst. The advantage of adopting this preferred embodiment is that the larger pore diameter promotes the diffusion of larger reaction molecules during the reaction, reduces the formation of carbon deposits on the catalyst surface, and promotes the stability of the catalyst.

In a further preferred embodiment, the atomic ratio of the co-active component to the total amount of the co-active component and the metal element(s) of Group VIB is in the range of 0.1-0.5:1, preferably 0.2-0.35:1. The advantage of adopting this preferred embodiment is that the co-active component and the metal element(s) of Group VIB maintain a good synergistic effect to exert a higher catalytic performance.

In the catalyst of the first preferred embodiment, the type of support is widely selected, and conventional supports in the art are applicable to the present application. Preferably, the support is an alumina support.

In a further preferred embodiment, the phosphorus element in the catalyst comprises two parts, wherein one part is introduced through the alumina support, and the other part is introduced during the preparation of the active metal component impregnation solution. In this case, the alumina support contains phosphorus element, hereinafter referred to as phosphorus-containing alumina. The advantage of adopting this preferred embodiment is that the alumina support containing a specific amount of phosphorus element can significantly promote the activity of the catalyst.

In a further preferred embodiment, the phosphorus content in the alumina support, calculated as $P_2O_5$, accounts for 10-40 wt%, preferably 20-30 wt%, of the total phosphorus content in the catalyst. The advantage of adopting this preferred embodiment is that, by reasonably controlling the content of phosphorus element in the alumina support, it is possible to further increase the supporting degree of the active metal components on the alumina support, thereby improving the dispersion of the active metal components.

In this further preferred embodiment, the phosphorus element may be introduced into the alumina support after molding, or may be introduced during the molding process of the alumina support, or may be introduced during the preparation process of the alumina support precursor, preferably introduced during the preparation process of the alumina support precursor. When introduced during the preparation process of the alumina precursor, the phosphorus element may be introduced by adding a phosphorus-containing compound during the preparation of the alumina precursor using the aluminum sulfate-sodium aluminate method. Specifically, phosphoric acid or phosphate may be introduced as a raw material for preparation of the precursor, or introduced at any step during the preparation process of the alumina precursor. By introducing the phosphorus element into the alumina precursor, the structural properties of the alumina support can be improved, thereby improving the ability for dispersion of the active metal components.

In certain particularly preferred embodiments, the phosphorus element in the phosphorus-containing alumina support may be provided by a precursor of the alumina support. Further preferably, the precursor of the alumina support is pseudo-boehmite, and the pseudo-boehmite contains phosphorus element. Even more preferably, the sodium oxide content in the pseudo-boehmite as the precursor of the alumina support is in the range of no more than 0.08 wt%, preferably no more than 0.05 wt%. The advantage of adopting this preferred embodiment is that, by controlling the sodium oxide content in the pseudo-boehmite, it is possible to further reduce the alkaline centers, enabling the catalyst to exhibit good activity and enhancing the hydrodenitrogenation effect of the catalyst.

In the catalyst of the first preferred embodiment, there is no specific restriction on the preparation method of the phosphorus-containing alumina support, and conventional preparation methods in the art are applicable to the present application. Preferably, the phosphorus-containing alumina support is prepared by extrusion molding, and the specific operation method is not elaborated herein.

In the catalyst of the first preferred embodiment, in order to further improve the performance of the catalyst, a support with a specific composition and structure is selected as the support of the hydrogenation catalyst. Preferably, the alumina support has a water absorption rate of more than 0.9 mL/g, more preferably 0.95-1.3 mL/g, a specific surface area of more than 260 m$^2$/g, more preferably 270-320 m$^2$/g, and an average pore diameter of more than 8 nm, more preferably 10-15 nm. The advantage of adopting this preferred embodiment is that the support provides a larger pore diameter, facilitating sufficient contact between reaction molecules and the active components, and improving the denitrogenation activity and stability of the catalyst.

In a further preferred embodiment, the pore volume of the alumina support with a pore diameter in the range of 100-300 nm accounts for 5-15%, more preferably 7-13% of the total pore volume of the alumina support. The use of the support with a specific composition and structure as mentioned above (preferably an alumina support) has the advantage of providing a broad reaction space and thus promoting the contact between the reaction molecules and the active centers.

In a preferred embodiment, in the catalyst, the molar ratio of alcohol to the metal element(s) of Group VIB is in the range of 0.2-4:1, preferably 0.5-2.5:1, more preferably 0.6-2.2:1; the molar ratio of the total amount of the carboxylic acid and the amine to the co-active component is in the range of 0.3-1.5:1, preferably 0.4-1.2:1, more preferably 0.5-1.1:1. The advantage of adopting this preferred embodiment is to maintain a high dispersion of metals in the catalyst, so as to improve the activity and stability of the catalyst.

**The second preferred embodiment**

According to a second preferred embodiment, the hydrogenation catalyst comprises cobalt element and optionally one or more other metal element(s) of Group VIII, at least one metal element(s) of Group VIB, phosphorus element, a support, and an organic complexing component comprising an alcohol and at least one selected from a carboxylic acid and an amine;

wherein, the catalyst has a spectrum obtained by a temperature-programmed oxidation test exhibiting at least two $CO_2$ release peaks, the temperature corresponding to the first release peak is in the range of 200-300°C, the temperature corresponding to the second release peak is in the range of 300-400°C, and the ratio of the peak height of the first release peak to the peak height of the second release peak is in the range of 1-5:1.

The inventors of the present application have found in their research that the introduction of alcohol and carboxylic acid/amine into the catalyst of the second preferred embodiment for complexing cobalt and phosphorus elements in the catalyst can significantly improve the activity of the catalyst. The catalyst is particularly suitable for the hydrogenation treatment of distillate oils with a proportion of secondary processed diesel in the range of no more than 15 wt% in the distillate oils to be treated, and exhibits good activity and low reaction hydrogen consumption.

In a further preferred embodiment, based on the dry weight of the catalyst and calculated as oxides, the content of cobalt element and optional other metal element(s) of Group VIII is in the range of 1-15 wt%, preferably 2-12 wt%, more preferably 3-7 wt%; and the content of metal element(s) of Group VIB is in the range of 12-50 wt%, preferably 15-45 wt%, more preferably 18-40 wt%. The advantage of adopting this preferred embodiment is that the catalyst exhibits higher hydrodesulphurization activity and stability.

In a further preferred embodiment, the atomic ratio of cobalt element to the total amount of cobalt element and optional other metal element(s) of Group VIII is no less than 0.8:1, more preferably 0.85-1:1, and even more preferably 0.9-1:1. The advantage of adopting this preferred embodiment is that the catalyst activity can be further improved and the reaction hydrogen consumption can be reduced.

In a further preferred embodiment, the phosphorus content in the catalyst, calculated as $P_2O_5$, is in the range of 3-10 wt%, more preferably 3.5-9 wt%, and even more preferably 4-8 wt%. The advantage of adopting this preferred embodiment is that the catalyst can exhibit a higher activity.

In a further preferred embodiment, in the spectrum obtained by the temperature-programmed oxidation test of the catalyst, the temperature corresponding to the first $CO_2$ release peak is in the range of 220-280°C, the temperature corresponding to the second $CO_2$ release peak is in the range of 320-380°C, and the ratio of the peak height of the first release peak to the peak height of the second release peak is in the range of 1.5-3:1. The advantage of adopting this preferred embodiment is that the catalyst can maintain higher activity and stability.

In a further preferred embodiment, the other metal element(s) of Group VIII is selected from at least one of iron, ruthenium, rhodium, nickel and palladium, and is more preferably nickel.

In a further preferred embodiment, in the catalyst, the atomic ratio of the metal element(s) of Group VIII to the total amount of the metal element(s) of Group VIII and the metal element(s) of Group VIB is in the range of 0.1-0.5:1, preferably 0.2-0.35:1. The advantage of adopting this preferred embodiment is that the metal element(s) of Group VIII and the metal element(s) of Group VIB maintain a good synergistic effect to exert a higher catalytic performance.

In the catalyst of the second preferred embodiment, the type of support is widely selected, and conventional supports in the art are applicable to the present application. Preferably, the support is an alumina support.

In a further preferred embodiment, the phosphorus element in the catalyst comprises two parts, wherein one part is introduced through the alumina support, and the other part is introduced during the preparation of the active metal component impregnation solution. In this case, the alumina support contains phosphorus element, hereinafter referred to as phosphorus-containing alumina. The advantage of adopting this preferred embodiment is that the alumina support containing a specific amount of phosphorus element can significantly promote the activity of the catalyst.

In a further preferred embodiment, the phosphorus content in the alumina support, calculated as $P_2O_5$, accounts for 10-40 wt%, preferably 20-30 wt%, of the total phosphorus content in the catalyst. The advantage of adopting this preferred embodiment is that, by reasonably controlling the content of phosphorus element in the alumina support, it is possible to further increase the supporting degree of the active metal components on the alumina support, thereby improving the dispersion of the active metal components.

In this further preferred embodiment, the phosphorus element may be introduced into the alumina support after molding, or may be introduced during the molding process of the alumina support, or may be introduced during the preparation process of the alumina support precursor, preferably introduced during the preparation process of the alumina support precursor. When introduced during the preparation process of the alumina precursor, the phosphorus element may be introduced by adding a phosphorus-containing compound during the preparation of the alumina precursor using the aluminum sulfate-sodium aluminate method. Specifically, phosphoric acid or phosphate may be introduced as a raw material for preparation of the precursor, or introduced at any step during the preparation process of the alumina precursor. By introducing the phosphorus element into the alumina precursor, the structural properties of the alumina support can be improved, thereby improving the ability for dispersion of the active metal components.

In certain particularly preferred embodiments, the phosphorus element in the phosphorus-containing alumina support may be provided by a precursor of the alumina support. Further preferably, the precursor of the alumina support is pseudo-boehmite, and the pseudo-boehmite contains phosphorus element. Even more preferably, the sodium oxide content in the pseudo-boehmite as the precursor of the alumina support is in the range of no more than 0.08 wt%, preferably no more than 0.05 wt%. The advantage of adopting this preferred embodiment is that, by controlling the sodium oxide content in the pseudo-boehmite, it is possible to further reduce the alkaline centers, enabling the catalyst to exhibit good activity and enhancing the hydrodesulphurization effect of the catalyst.

In the second preferred embodiment, there is no specific restriction on the preparation method of the phosphorus-containing alumina support, and conventional preparation methods in the art are applicable to the present application. Preferably, the phosphorus-containing alumina support is prepared by extrusion molding, and the specific operation method is not elaborated herein

In the second preferred embodiment, in order to further improve the performance of the catalyst, a support with a specific composition and structure is selected as the support of the hydrodesulphurization catalyst. Preferably, the alumina support has a water absorption rate of more than 0.9 mL/g, more preferably 0.95-1.3 mL/g, a specific surface area of more than 260 m$^2$/g, more preferably 270-320 m$^2$/g, and an average pore diameter of more than 8 nm, more preferably 9-15 nm. The advantage of adopting this preferred embodiment is that, by selecting the support with a porous structure, the reactants can contact with the active centers of the catalyst to carry out a reaction therein, thereby improving the activity of the catalyst.

In a further preferred embodiment, in the alumina support, the proportion of the pore volume of pores with a pore diameter in the range of 2-6 nm to the total pore volume of the alumina support is in the range of no more than 10%, preferably no more than 8%, more preferably 3-6%.

In a further preferred embodiment, in the alumina support, the proportion of the pore volume of pores with a pore diameter in the range of 2-4 nm to the total pore volume of the alumina support is in the range of no more than 4%, preferably no more than 2%, more preferably 0-1%.

By using the support with a specific composition and structure as mentioned above (preferably an alumina support), the proportion of pores with smaller pore diameters in the support is relatively small, so that the reactants can better approach the active centers, ensuring that the catalyst has a relatively unobstructed pore structure, promoting the diffusion of reaction molecules to the active centers under low pressure, and thereby improving the activity of the catalyst.

In a preferred embodiment, in the catalyst, the molar ratio of alcohol to the metal element(s) of Group VIB is in the range of 0.2-4:1, preferably 0.3-3.5:1, more preferably 0.8-2.5:1, and the molar ratio of the total amount of the carboxylic acid and the amine to the metal element(s) of Group VIII is in the range of 0.1-4:1, preferably 0.2-3.5:1, more preferably 0.5-3:1. The advantage of adopting this preferred embodiment is to make metals in the catalyst maintain highly dispersed so as to improve the activity and stability of the catalyst.

In a second aspect, provided is a method for preparing the hydrogenation catalyst of the present application, comprising steps of:

1) providing a catalyst support; and
2) supporting a Group VIII metal precursor, a Group VIB metal precursor, a phosphorus-containing compound and the organic complexing component on the catalyst support by impregnation, followed by drying to obtain the hydrogenation catalyst.

In a preferred embodiment, the drying is carried out under conditions including: a temperature of 60-200°C and a time of 2-10 h.

In a preferred embodiment, the impregnation in step 2) comprises impregnating the catalyst support with an impregnation solution comprising the Group VIII metal precursor, the Group VIB metal precursor, the phosphorus-containing compound and the organic complexing component. Further preferably, the impregnation solution is obtained by respectively adding the Group VIII metal precursor, the Group VIB metal precursor and the organic complexing component into an aqueous solution of the phosphorus-containing compound.

In a preferred embodiment, the catalyst support is an alumina support, and the step 1) further comprises molding and calcining phosphorus-containing pseudo-boehmite powders to obtain the alumina support. Further preferably, the phosphorus-containing pseudo-boehmite powders are prepared by introducing phosphoric acid during the preparation of pseudo-boehmite powders. Even more preferably, the sodium oxide content in the phosphorus-containing pseudo-boehmite powders is in the range of no more than 0.08 wt%, and more preferably no more than 0.05 wt%.

In a preferred embodiment, the precursor of the Group VIII metal is selected from the respective soluble salts or chlorides. For example, the precursor of nickel may be selected from at least one of nickel nitrate, basic nickel carbonate, nickel acetate and nickel propionate; the precursor of iron may be selected from at least one of ferric nitrate, ferric chloride and ferric acetate; the precursor of ruthenium may be selected from at least one of ruthenium nitrate, ruthenium chloride and ruthenium acetate; the precursor of osmium may be selected from osmium nitrate and/or osmium trichloride; and the precursor of cobalt may be selected from at least one of cobalt nitrate, basic cobalt carbonate and cobalt acetate.

In a preferred embodiment, the precursor of the Group VIB metal is selected from at least one of ammonium heptamolybdate, ammonium molybdate, ammonium phosphomolybdate, ammonium meta-tungstate and ammonium ethyl meta-tungstate.

In a preferred embodiment, the phosphorus-containing compound is selected from at least one of phosphoric acid, phosphonous acid (phosphinic acid), ammonium phosphate and ammonium dihydrogen phosphate.

According to the present application, there is no specific restriction on the impregnation method, and conventional impregnation methods in the art are applicable to the present application. For example, it may be one of co-impregnation, stepwise impregnation, saturated impregnation and supersaturated impregnation. In a preferred embodiment, the hydrogenation catalyst is prepared by co-impregnation. In a further preferred embodiment, the impregnation method comprises: impregnating the support (preferably alumina) with an impregnation solution comprising the Group VIII metal precursor, the Group VIB metal precursor, the phosphorus-containing compound and the organic complexing component.

In the present application, there is no specific restriction on the order of adding the Group VIII metal precursor, the Group VIB metal precursor, the phosphorus-containing compound and the organic complexing component, as long as it is conducive to uniform mixing of each of these components. In a preferred embodiment, the alcohol and carboxylic acid/ amine, the Group VIII metal precursor and the Group VIB metal precursor are respectively added to the aqueous solution of the phosphorus-containing compound to provide the impregnation solution. In the present application, the order of adding the alcohol, carboxylic acid/ amine, the phosphorus-containing compound and the metal precursors may also be interchanged.

In the present application, the hydrogenation catalyst may be prepared specifically by the following preparation method: first dissolving the phosphorus-containing compound in water to obtain a phosphorus-containing aqueous solution, then adding the organic complexing component comprising an alcohol and at least one selected from a carboxylic acid and an amine, the Group VIB metal precursor and the VIII group metal precursor, stirring under heating until completely dissolved, and keeping the temperature constant to obtain an impregnation solution; measuring the water absorption rate of the alumina support, and calculating the liquid absorption rate of the alumina support according to the formula of water absorption rate of the alumina support-0.1; according to the liquid absorption rate of the alumina support, fixing the impregnation solution to a corresponding volume (liquid absorption rate of the alumina support $\times$ mass of the support), and mixing the impregnation solution with the alumina support at the corresponding mass evenly and allowing the mixture to stand, followed by drying to prepare the hydrogenation catalyst.

In the present application, there is no specific restriction on the stirring conditions. Preferably, the stirring is carried out at a temperature of 40-100°C for a time of 1-8h.

In the present application, there is no specific restriction on the selection of drying conditions. Preferably, the drying is carried out under conditions including: a temperature of 60-200°C and a time of 2-10h.

In the hydrogenation catalyst preparation method of the present application, the obtained hydrogenation catalyst is not subjected to calcination treatment, so that the organic matters can be retained in the catalyst, promoting the generation of more active centers, and maintaining a higher initial activity of the catalyst.

In a third aspect, the present application provides a method for grading hydrogenation catalysts, comprising: sequentially loading a first hydrogenation catalyst and a second hydrogenation catalyst along a direction of material flow, wherein the first hydrogenation catalyst is the hydrogenation catalyst according to the first aspect of the present application, wherein the Group VIII metal in the hydrogenation catalyst is nickel or a combination of nickel with at least one of iron, ruthenium and osmium, and the atomic ratio of nickel to the total amount of Group VIII metal(s) is in the range of 0.8-1:1, preferably 0.85-1:1, and the second hydrogenation catalyst is the hydrogenation catalyst according to the first aspect of the present application, wherein the Group VIII metal in the hydrogenation catalyst is cobalt or a combination of cobalt with one or more other Group VIII metal(s), and the atomic ratio of cobalt to the total amount of Group VIII metal(s) is in the range of 0.8-1:1, preferably 0.85-1:1, and the loading volume ratio of the first hydrogenation catalyst to the second hydrogenation catalyst is from 1:2 to 5:1.

In a preferred embodiment, in the spectrum obtained by the temperature-programmed oxidation test of the first hydrogenation catalyst, the temperature corresponding to the first release peak is in the range of 210-280°C, the temperature corresponding to the second release peak is in the range of 320-380°C, and the ratio of the peak height of the first release peak to the peak height of the second release peak is in the range of 0.5-4:1. Further preferably, in the spectrum obtained by the temperature-programmed oxidation test of the first hydrogenation catalyst, the temperature corresponding to the first release peak is in the range of 230-260°C, the temperature corresponding to the second release peak is in the range of 320-360°C, and the ratio of the peak height of the first release peak to the peak height of the second release peak is in the range of 0.7-3.5: 1.

In a preferred embodiment, the pore volume of pores with a pore diameter in the range of 100-300 nm in the first hydrogenation catalyst accounts for no more than 20%, preferably 5-20%, of the total pore volume of the catalyst.

In a preferred embodiment, in the first hydrogenation catalyst, the molar ratio of the alcohol to the Group VIB metal is in the range of 0.2-4:1, preferably 0.5-2.5:1, more preferably 0.6-2.2:1, and the molar ratio of the total amount of the carboxylic acid and the amine to the Group VIII metal is in the range of 0.3-1.5:1, preferably 0.4-1.2:1, more preferably 0.5-1.1:1.

In certain particularly preferred embodiments, the first hydrogenation catalyst is a catalyst according to the first preferred embodiment of the first aspect of the present application.

In a preferred embodiment, in the spectrum obtained by the temperature-programmed oxidation test of the second hydrogenation catalyst, the ratio of the peak height of the first release peak to the peak height of the second release peak is in the range of 1-5: 1. More preferably, in the spectrum obtained by the temperature-programmed oxidation test of the second hydrogenation catalyst, the temperature corresponding to the first release peak is in the range of 220-280°C, the temperature corresponding to the second release peak is in the range of 320-380°C, and the ratio of the peak height of the first release peak to the peak height of the second release peak is in the range of 1.5-3:1.

In a further preferred embodiment, in the second hydrogenation catalyst, the molar ratio of the alcohol to the Group VIB metal is in the range of 0.2-4:1, preferably 0.3-3.5:1, more preferably 0.8-2.5:1, and the molar ratio of the total amount of the carboxylic acid and the amine to the Group VIII metal(s) is in the range of 0.1-4:1, preferably 0.2-3.5:1, more preferably 0.5-3:1.

In certain particularly preferred embodiments, the second hydrogenation catalyst is a catalyst according to the second preferred embodiment of the first aspect of the present application.

In a preferred embodiment, the loading volume ratio of the first hydrogenation catalyst to the second hydrogenation catalyst is in the range of 1:1 to 4:1. The use of this preferred embodiment enables the catalyst system to exhibit higher desulphurization activity, aromatic saturation activity and lower hydrogen consumption.

In the hydrogenation catalyst grading method of the present application, the first hydrogenation catalyst has good catalytic activity and stability, and the second hydrogenation catalyst has good catalytic activity and low hydrogen consumption. The first hydrogenation catalyst and the second hydrogenation catalyst are loaded according to a specific volume ratio so that the two catalysts cooperate with each other synergistically. When they are used to treat the distillate oil with the secondary processed diesel in the distillate oil to be treated at a ratio of 10-30 wt%, the reaction system has good activity and stability, can achieve good desulphurization and dearomatization performance, as well as low reaction hydrogen consumption, and thus has excellent industrial value.

In a fourth aspect, provided is the use of the hydrogenation catalyst of the present application in distillate oil hydrofining, preferably the hydrofining is selected from hydrodesulphurization, hydrodenitrogenation or a combination thereof.

In a fifth aspect, the present application provides a method for hydrofining distillate oil, comprising a step of contacting the distillate oil with the hydrogenation catalyst of the present application in the presence of hydrogen to carry out a reaction, wherein the hydrogenation catalyst is subjected to sulphurization treatment before use, preferably the hydrofining is selected from hydrodesulphurization, hydrodenitrogenation or a combination thereof.

According to the present application, the hydrogenation catalyst needs to be converted from an oxidized catalyst to a sulphurized catalyst by sulphurization before use. In the present application, there is no specific restriction on the sulphurization method, and conventional sulphurization methods in the art are applicable to the present application. For example, the sulphurization may be one of dry sulphurization and wet sulphurization. In the present application, there is no specific restriction on the type of the sulphurizing agent, and it may be selected according to conventional schemes in the art.

In a preferred embodiment, the sulphurization treatment is carried out by contacting the hydrogenation catalyst with a sulphurizing oil carrying a sulphurizing agent, and the sulphurization treatment is carried out under conditions preferably including: a heating rate of 5-60°C/h, a sulphurization temperature of 280-420°C, a sulphurization time of 8-48h, a sulphurization pressure of 0.1-15MPa, a volume space velocity of the sulphurizing oil of 0.5-20h$^{-1}$, and a hydrogen-oil volume ratio of 100-2000:1, wherein the volume space velocity is the ratio of the volume feed rate of the sulphurizing oil to the volume of the catalyst, and the hydrogen-oil volume ratio is the ratio of the hydrogen flow rate to the volume feed rate of the sulphurizing oil under standard conditions. Further preferably, the sulphurizing agent is a sulfur-containing compound such as DMDS, $CS_2$, SZ-54, etc.

In certain preferred embodiments, the hydrofining is hydrodenitrogenation, and the Group VIII metal in the hydrogenation catalyst is nickel or a combination of nickel with at least one of iron, ruthenium and osmium, and the atomic ratio of nickel to the total amount of Group VIII metal(s) is in the range of 0.8-1:1, preferably 0.85-1:1.

In a further preferred embodiment, in the spectrum obtained by the temperature-programmed oxidation test of the hydrogenation catalyst, the temperature corresponding to the first release peak is in the range of 210-280°C, the temperature corresponding to the second release peak is in the range of 320-380°C, and the ratio of the peak height of the first release peak to the peak height of the second release peak is in the range of 0.5-4: 1. Further preferably, in the spectrum obtained by the temperature-programmed oxidation test of the hydrogenation catalyst, the temperature corresponding to the first release peak is in the range of 230-260°C, the temperature corresponding to the second release peak is in the range of 320-360°C, and the ratio of the peak height of the first release peak to the peak height of the second release peak is in the range of 0.7-3.5: 1.

In a further preferred embodiment, the pore volume of pores in the catalyst with a pore diameter in the range of 100-300 nm accounts for no more than 20%, preferably 5-20%, of the total pore volume of the catalyst.

In a further preferred embodiment, in the hydrogenation catalyst, the molar ratio of the alcohol to the Group VIB metal is in the range of 0.2-4:1, preferably 0.5-2.5:1, more preferably 0.6-2.2:1, and the molar ratio of the total amount of the carboxylic acid and the amine to the Group VIII metal is in the range of 0.3-1.5:1, preferably 0.4-1.2:1, more preferably 0.5-1.1:1.

In certain particularly preferred embodiments, the hydrogenation catalyst is a catalyst according to the first preferred embodiment of the first aspect of the present application.

In a further preferred embodiment, the reaction is carried out under conditions including: a temperature of 320-400°C, a pressure of 6-20MPa, a volume space velocity of 0.5-3h$^{-1}$, and a hydrogen-to-oil volume ratio of 300-1500:1.

In a further preferred embodiment, the proportion of secondary processed diesel in the distillate oil is in the range of 20-70 wt%. Such a preferred embodiment may be used to better exert the hydrodenitrogenation activity and stability of the catalyst, so that the nitrogen content in the product can meet the quality standard of National VI clean diesel or the needs of further processing. Further preferably, in the distillate oil, the content of straight-run diesel is in the range of 45-75 wt%, the content of catalytic diesel is in the range of 25-55 wt%, and the nitrogen content is in the range of 50-2000 ppm.

In other preferred embodiments, the hydrofining is hydrodesulphurization, and the Group VIII metal in the hydrogenation catalyst is cobalt or a combination of cobalt with one or more other Group VIII metal(s), and the atomic ratio of cobalt to the total amount of Group VIII metal(s) is in the range of 0.8-1:1, preferably 0.85-1:1.

In a further preferred embodiment, in the spectrum obtained by the temperature-programmed oxidation test of the catalyst, the ratio of the peak height of the first release peak to the peak height of the second release peak is in the range of 1-5:1. More preferably, in the spectrum obtained by the temperature-programmed oxidation test of the catalyst, the temperature corresponding to the first release peak is in the range of 220-280°C, the temperature corresponding to the second release peak is in the range of 320-380°C, and the ratio of the peak height of the first release peak to the peak height of the second release peak is in the range of 1.5-3: 1.

In a further preferred embodiment, in the hydrogenation catalyst, the molar ratio of the alcohol to the Group VIB metal is in the range of 0.2-4:1, preferably 0.3-3.5:1, more preferably 0.8-2.5:1, and the molar ratio of the total amount of the carboxylic acid and the amine to the Group VIII metal is in the range of 0.1-4:1, preferably 0.2-3.5:1, more preferably 0.5-3:1.

In certain particularly preferred embodiments, the hydrogenation catalyst is a catalyst according to the second preferred embodiment of the first aspect of the present application.

In a further preferred embodiment, the reaction is carried out under conditions including: a temperature of 320-400°C, a pressure of 3-8MPa, a volume space velocity of 0.5-3h$^{-1}$, and a hydrogen-to-oil volume ratio of 100-500:1.

In a further preferred embodiment, the proportion of secondary processed diesel in the distillate oil is in the range of 0-15 wt%. Such a preferred embodiment may be used to better exert the hydrodesulphurization activity and stability of the catalyst, so that the sulfur and aromatics content in the product can meet the quality standard of National VI clean diesel. Further preferably, in the distillate oil, the straight-run diesel content is in the range of 90-100 wt%, the catalytic diesel content is in the range of 0-10 wt%, and the sulfur content is in the range of 5000-18000 ppm.

In certain particularly preferred embodiments, the distillate oil hydrofining method of the present application includes, in the presence of hydrogen, allowing the distillate oil to first pass through a first reaction zone loaded with a first hydrogenation catalyst for a hydrodenitrogenation reaction, and then to pass through a second reaction zone loaded with a second hydrogenation catalyst for a hydrodesulphurization reaction, wherein the first hydrogenation catalyst and the second hydrogenation catalyst are as described in the third aspect of the present application and will not be elaborated herein.

In this particularly preferred embodiment, the hydrofining device used may be selected from any conventional reactor, as long as the raw material can be contacted with the first hydrogenation catalyst and the second hydrogenation catalyst for reaction in sequence. For example, the following two methods may be selected: Method 1. connecting two hydrogenation reactors in series to form a first reaction zone and a second reaction zone, loading the first hydrogenation catalyst in the first reaction zone, and loading the second hydrogenation catalyst in the second reaction zone, allowing the raw material to pass through the first reactor, then to pass through the second reactor for reaction; Method 2. dividing a reactor into a first reaction zone and a second reaction zone arranged in an upper and lower manner, loading the first hydrogenation catalyst and the second hydrogenation catalyst in the two reaction zones respectively, and injecting the raw material into the reactor from top to bottom for reaction.

In a further preferred embodiment, the reaction conditions in the first reaction zone and the second reaction zone each independently include: a temperature of 300-450°C, a pressure of 3-20MPa, a volume space velocity of 0.5-3h$^{-1}$, a hydrogen-oil volume ratio of 100-2000:1. More preferably, the conditions of the first reaction zone include: a temperature of 320-420°C, a pressure of 6-20MPa, a volume space velocity of 0.5-3h$^{-1}$, a hydrogen-oil volume ratio of 300-1500:1; the conditions of the second hydrogenation reaction zone include: a temperature of 320-400°C, a pressure of 3-8MPa, a volume space velocity of 0.5-3h$^{-1}$, a hydrogen-oil volume ratio of 100-500:1. Such a preferred embodiment may be used to better play the performance of the catalysts in the first reaction zone and the second reaction zone.

In a further preferred embodiment, the proportion of secondary processed diesel in the distillate oil is in the range of 10-30 wt%. The advantage of adopting this preferred embodiment is that clean diesel that meets the National VI standard may be produced under relatively mild conditions, and the hydrogen consumption is also low during the reaction process. More preferably, in the distillate oil, the straight-run diesel content is in the range of 75-85 wt%, the catalytic diesel content is in the range of 15-25 wt%, the sulfur content is in the range of 2000-18000 ppm, and the aromatic content is in the range of 15-45 wt%.

In a sixth aspect, the present application provides a hydrogenation catalyst graded system, comprising a first hydrogenation catalyst and a second hydrogenation catalyst, wherein the volume ratio of the first hydrogenation catalyst to the second hydrogenation catalyst is from 1:2 to 5:1, preferably from 1:1 to 4:1, wherein the first hydrogenation catalyst and the second hydrogenation catalyst are as defined in the third aspect of the present application and will not be elaborated herein.

According to the present application, in the hydrogenation catalyst graded system, the first hydrogenation catalyst and the second hydrogenation catalyst exist in a form relatively independent from each other, rather than in a form of a mixture. For example, the first hydrogenation catalyst and the second hydrogenation catalyst may be loaded in different containers or different zones of the same container, or loaded in different reactors or different zones of the same reactor.

**Examples**

The present application is further described below in conjunction with Examples, but the present application is not limited thereto.

Example I series

The following Example I series further describe the preparation and use of the hydrogenation catalyst according to the first preferred embodiment of the first aspect of the present application, wherein:

The hydrodenitrogenation performance of the catalyst was tested in a high-throughput hydrogenation reaction device. First, the oxidized catalyst was converted into a sulphurized catalyst by a temperature-programmed sulphurization method. The sulphurization conditions were as follows: the sulphurization pressure was 6.4MPa, the sulphurized oil was kerosene containing 2 wt% of $CS_2$, the volume space velocity was 2h$^{-1}$, the hydrogen-oil ratio was 300v/v, and the temperature was first kept constant at 230°C for 6h, and then raised to 360°C for sulphurization for 8h. The heating rate of each stage was 10°C/h. After sulphurization, the reaction raw material was switched to carry out the hydrodenitrogenation activity test. In the distillate oil to be treated, the straight-run diesel content was 45 wt%, the catalytic diesel content was 55 wt%, and the nitrogen content was 951 ppm. The test conditions were: a pressure of 6.4MPa, a volume space velocity of 1.3h$^{-1}$, a hydrogen-oil ratio of 600v/v, and a reaction temperature of 360°C. The reaction was carried out stably for 12 days, and the nitrogen content in the product on the 1$^{st}$ and 12$^{th}$ days of the reaction was analyzed. The ratio of the reaction rate constant after stabilization to the initial reaction rate constant, obtained by calculating the reaction rate constant after stabilization and the initial reaction rate constant, was called as activity retention to express the stability of the catalyst. The higher the activity retention, the better the stability of the catalyst.

The composition of the catalyst was calculated based on the feed amount. The pore distribution, pore diameter and pore volume of pores within 100-300 nm in the catalyst and the support were determined by mercury porosimetry. The nitrogen mass fraction in the product was analyzed using a sulfur and nitrogen analyzer (produced by Thermo Fisher Scientific, model TN/TS3000).

The $CO_2$ release peak was measured by temperature-programmed oxidation method. The analysis was performed on a NETZSCH STA 409 PC/PG instrument. The sample was heated in an air atmosphere (at a heating rate of 10°C/min over a heating range of 50-800°C), and was monitored at the gas outlet of the instrument by a mass spectrometer to obtain a curve of $CO_2$ produced by sample decomposition as a function of temperature.

The reaction rate constant was calculated according to the following formula: $k = LHSV \times \ln(N_f/N_p)$, wherein LHSV was the reaction space velocity, and $N_f$ and $N_p$ were the nitrogen contents of the raw material and product, respectively.

Example I-1

A certain amount of $MoO_3$, basic nickel carbonate, ethylene glycol, and citric acid were added to an aqueous solution containing phosphoric acid, respectively. The mixture was heated and stirred at 85°C for 3h until completely dissolved, to obtain an impregnation solution containing active metals. The impregnation solution was mixed evenly with the support and allowed to stand for 3h. The mixture was dried at 120°C for 5h to prepare a catalyst with a particle size of 1.6 mm and a butterfly shape. The pore volume of pores with a pore diameter in the range of 100-300 nm of the catalyst accounted for 15% of the total pore volume of the catalyst.

The support used to prepare the catalyst was a $\gamma$-alumina support, with a water absorption rate of 1.08 mL/g, a specific surface area of 280 $m^2$/g, an average pore diameter of 14.8 nm, and the pore volume of pores with a pore diameter in the range of 100-300 nm accounting for 12% of the total pore volume. The sodium oxide content in the support was 0.05 wt%. The alumina support used to prepare the catalyst contained phosphorus element, which was originated from the pseudo-boehmite powders used to prepare the support, and the phosphorus-containing pseudo-boehmite powders were prepared by introducing a certain amount of phosphoric acid during the preparation of the pseudo-boehmite powders. The phosphorus-containing pseudo-boehmite powders were molded and calcined at 600°C for 3h to obtain the phosphorus-containing alumina support.

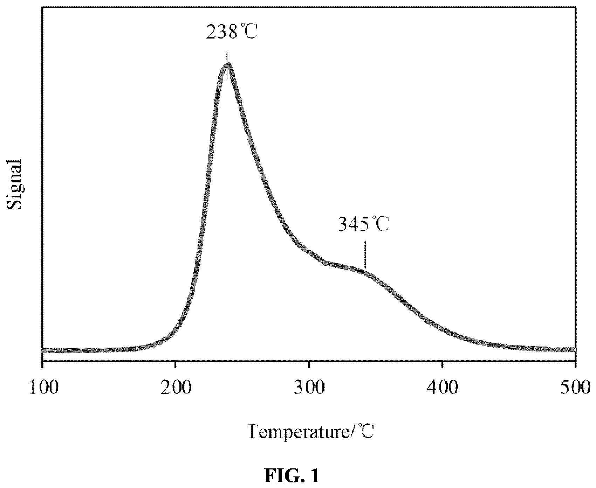

The prepared catalyst had a $MoO_3$ content of 30.0 wt%, a NiO content of 4.5 wt%, a Ni/(Ni+Mo) atomic ratio of 0.22, and a $P_2O_5$ content of 7.0 wt%, in which 30 wt% of $P_2O_5$ was originated from the support. The molar ratio of ethylene glycol to the metal element of Group VIB was 1.5:1, and the molar ratio of citric acid to nickel element was 1:1. The catalyst was subjected to the temperature-programmed oxidation test. As shown in FIG. 1, $CO_2$ release peaks appeared at 238°C and 345°C, respectively, and the ratio of their peak heights in the spectrum was 3.5:1.

After the catalyst was sulphurized and tested by reaction, the nitrogen content in the product was 1.5 ppm. The reaction conditions were kept stable and the activity retention was 89.5% after 12 days of reaction.

Example I-2

A certain amount of $MoO_3$, basic nickel carbonate, glycerol, and acetic acid were added to an aqueous solution containing phosphoric acid, respectively. The mixture was heated and stirred at 85°C for 3h until completely dissolved, to obtain an impregnation solution containing active metals. The impregnation solution was mixed evenly with the support and allowed to stand for 3h. The mixture was dried at 120°C for 5h to prepare a catalyst with a particle size of 1.6 mm and a butterfly shape. The pore volume of pores with a pore diameter in the range of 100-300 nm of the catalyst accounted for 15% of the total pore volume of the catalyst.

The support used in Example I-2 was the same as that in Example I-1.

The prepared catalyst had a $MoO_3$ content of 24.0 wt%, a NiO content of 7.0 wt%, a Ni/(Ni+Mo) atomic ratio of 0.36, and a $P_2O_5$ content of 6.5 wt%, in which 20 wt% of $P_2O_5$ was originated from the support. The molar ratio of glycerol to the Group VIB metal was 1.2:1, and the molar ratio of acetic acid to nickel element was 1.5:1. The catalyst was subjected to the temperature-programmed oxidation test, and $CO_2$ release peaks appeared at 240°C and 340°C, respectively, and the ratio of their peak heights in the spectrum was 3.3:1.

After the catalyst was sulphurized and tested by reaction, the nitrogen content in the product was 1.8 ppm. The reaction conditions were kept stable and the activity retention was 88.6% after 12 days of reaction.

Example I-3

A certain amount of $MoO_3$, basic nickel carbonate, butanol, and acetic acid were added to an aqueous solution containing phosphoric acid, respectively. The mixture was heated and stirred at 85°C for 3h until completely dissolved, to obtain an impregnation solution containing active metals. The impregnation solution was mixed evenly with the support and then allowed to stand for 3h. The mixture was dried at 120°C for 5h to prepare a catalyst with a particle size of 1.6 mm and a butterfly shape. The pore volume of pores with a pore diameter in the range of 100-300 nm of the catalyst accounted for 15% of the total pore volume of the catalyst.

The support used in Example I-3 was the same as that in Example I-1.

The prepared catalyst had a $MoO_3$ content of 38.0 wt%, a NiO content of 6.5 wt%, a Ni/(Ni+Mo) atomic ratio of 0.25, and a $P_2O_5$ content of 5.0 wt%, in which 10 wt% of $P_2O_5$ was originated from the support. The molar ratio of butanol to the Group VIB metal was 0.6:1, and the molar ratio of citric acid to nickel element was 1.2:1. The catalyst was subjected to the temperature-programmed oxidation test, and $CO_2$ release peaks appeared at 230°C and 348°C, respectively, and the ratio of their peak heights in the spectrum was 1.9:1.

After the catalyst was sulphurized and tested by reaction, the nitrogen content in the product was 0.9 ppm. The reaction conditions were kept stable and the activity retention was 86.5% after 12 days of reaction.

Example I-4

A certain amount of $MoO_3$, basic nickel carbonate, butanol, and triethanolamine were added to an aqueous solution containing phosphoric acid, respectively. The mixture was heated and stirred at 85°C for 3h until completely dissolved, to obtain an impregnation solution containing active metals. The impregnation solution was mixed evenly with the support and then allowed to stand for 3h. The mixture was dried at 120°C for 5h to prepare a catalyst with a particle size of 1.6 mm and a butterfly shape. The pore volume of pores with a pore diameter in the range of 100-300 nm of the catalyst accounted for 15% of the total pore volume of the catalyst.

The support used in Example I-4 was the same as that in Example I-1.

The prepared catalyst had a $MoO_3$ content of 26.0 wt%, a NiO content of 5.5 wt%, a Ni/(Ni+Mo) atomic ratio of 0.29, a $P_2O_5$ content of 4.5 wt%, in which 10 wt% of $P_2O_5$ was originated from the support. The molar ratio of butanol to the Group VIB metal was 1:1, and the molar ratio of triethanolamine to the nickel element was 1:1. The catalyst was subjected to the temperature-programmed oxidation test, and $CO_2$ release peaks appeared at 230°C and 332°C, respectively, and the ratio of their peak heights in the spectrum was 2.7:1.

After the catalyst was sulphurized and tested by reaction, the nitrogen content in the product was 1.9 ppm. The reaction conditions were kept stable and the activity retention was 87.5% after 12 days of reaction.

Example I-5

A certain amount of $MoO_3$, basic nickel carbonate, ethylene glycol, and citric acid were added to an aqueous solution containing phosphoric acid, respectively. The mixture was heated and stirred at 95°C for 3h until completely dissolved, to obtain an impregnation solution containing active metals. The impregnation solution was mixed evenly with the support and then allowed to stand for 3h. The mixture was dried at 120°C for 5h to prepare a catalyst with a particle size of 1.6 mm and a butterfly shape. The pore volume of pores with a pore diameter in the range of 100-300 nm of the catalyst accounted for 10% of the total pore volume of the catalyst.

The support used to prepare the catalyst was a $\gamma$-alumina support, with a water absorption rate of 1.04 mL/g, a specific surface area of 285 $m^2$/g, an average pore diameter of 12.6 nm, and the pore volume of pores with a pore diameter in the range of 100-300 nm accounting for 8% of the total pore volume. The sodium oxide content in the support was 0.03 wt%. The alumina support used to prepare the catalyst did not contain phosphorus element.

The prepared catalyst had a $MoO_3$ content of 26.0 wt%, a NiO content of 5.5 wt%, a Ni/(Ni+Mo) atomic ratio of 0.29, and a $P_2O_5$ content of 5.9 wt%. The molar ratio of ethylene glycol to the metal element of Group VIB was 0.8:1, and the molar ratio of citric acid to nickel element was 1:1. The catalyst was subjected to the temperature-programmed oxidation test, and $CO_2$ release peaks appeared at 240°C and 345°C, respectively, and the ratio of their peak heights in the spectrum was 1.2:1.

After the catalyst was sulphurized and tested by reaction, the nitrogen content in the product was 2.1 ppm. The reaction conditions were kept stable and the activity retention was 85.3% after 12 days of reaction.

Example I-6

A certain amount of $MoO_3$, basic nickel carbonate, ferric acetate, ethylene glycol, and citric acid were added to an aqueous solution containing phosphoric acid, respectively. The mixture was heated and stirred at 95°C for 3h until completely dissolved, to obtain an impregnation solution containing active metals. The impregnation solution was mixed evenly with the support and allowed to stand for 3h. The mixture was dried at 120°C for 5h to prepare a catalyst with a particle size of 1.6 mm and a butterfly shape. The pore volume of pores with a pore diameter in the range of 100-300 nm of the catalyst accounted for 15% of the total pore volume of the catalyst.

The support used in Example I-6 was the same as that in Example I-1.

The prepared catalyst had a $MoO_3$ content of 26.0 wt%, a NiO content of 3.0 wt%, a FeO content of 2.4%, a (Ni+Fe)/(Ni+Fe+Mo) atomic ratio of 0.29, a Ni/(Ni+Fe) atomic ratio of 0.55, a $P_2O_5$ content of 5.9 wt%, , in which 18 wt% of $P_2O_5$ was originated from the support. The molar ratio of ethylene glycol to the metal element of Group VIB was 0.8:1, and the molar ratio of citric acid to the elements of Group VIII was 1:1. The catalyst was subjected to the temperature-programmed oxidation test, and $CO_2$ release peaks appeared at 242°C and 340°C, respectively, and the ratio of their peak heights in the spectrum was 1.5:1.

After the catalyst was sulphurized and tested by reaction, the nitrogen content in the product was 3.5 ppm. The reaction conditions were kept stable and the activity retention was 84.3% after 12 days of reaction.

Example I-7

A certain amount of $MoO_3$, basic nickel carbonate, ruthenium acetate, ethylene glycol, and citric acid were added to an aqueous solution containing phosphoric acid, respectively. The mixture was heated and stirred at 90°C for 4h until completely dissolved, to obtain an impregnation solution containing active metals. The impregnation solution was mixed evenly with the support and allowed to stand for 2h. The mixture was dried at 130°C for 5h to prepare a catalyst with a particle size of 1.6 mm and a butterfly shape. The pore volume of pores with a pore diameter in the range of 100-300 nm of the catalyst accounted for 15% of the total pore volume of the catalyst.

The support used in Example I-7 was the same as that in Example I-1.

The prepared catalyst had a $MoO_3$ content of 26.0 wt%, a NiO content of 5.5 wt%, a $RuO_2$ content of 0.8%, a (Ni+Ru)/(Ni+Ru+Mo) atomic ratio of 0.306, a Ni/(Ni+Ru) atomic ratio of 0.925, a $P_2O_5$ content of 7 wt%, in which 30 wt% of $P_2O_5$ was originated from the support. The molar ratio of ethylene glycol to the metal element of Group VIB was 1.5:1, and the molar ratio of citric acid to the Group VIII element was 0.8:1. The catalyst was subjected to the temperature-programmed oxidation test, and $CO_2$ release peaks appeared at 248°C and 340°C, respectively, and the ratio of their peak heights in the spectrum was 2.6:1.

After the catalyst was sulphurized and tested by reaction, the nitrogen content in the product was 1.3 ppm. The reaction conditions were kept stable and the activity retention was 87.9% after 12 days of reaction.

Example I-8

A certain amount of $MoO_3$, basic nickel carbonate, glycerol, and citric acid were added to an aqueous solution containing phosphoric acid, respectively. The mixture was heated and stirred at 95°C for 3h until completely dissolved, to obtain an impregnation solution containing active metals. The impregnation solution was mixed evenly with the support and allowed to stand for 2h. The mixture was dried at 130°C for 3h to prepare a catalyst with a particle size of 1.6 mm and a butterfly shape. The pore volume of pores with a pore diameter in the range of 100-300 nm of the catalyst accounted for 15% of the total pore volume of the catalyst.

The support used in Example I-8 was the same as that in Example I-1.

The prepared catalyst had a $MoO_3$ content of 22.0 wt%, a NiO content of 7.9 wt%, a Ni/(Ni+Mo) atomic ratio of 0.41, and a $P_2O_5$ content of 7.5 wt%, in which 20 wt% of $P_2O_5$ was originated from the support. The molar ratio of glycerol to the Group VIB metal was 1:1, and the molar ratio of citric acid to nickel element was 0.8:1. The catalyst was subjected to the temperature-programmed oxidation test, and $CO_2$ release peaks appeared at 240°C and 335°C, respectively, and the ratio of their peak heights in the spectrum was 1.7:1.

After the catalyst was sulphurized and tested by reaction, the nitrogen content in the product was 2.8 ppm. The reaction conditions were kept stable and the activity retention was 83.5% after 12 days of reaction.

Example I-9

A certain amount of $MoO_3$, basic nickel carbonate, ethylene glycol, and citric acid were added to an aqueous solution containing phosphoric acid, respectively. The mixture was heated and stirred at 85°C for 3h until completely dissolved, to obtain an impregnation solution containing active metals. The impregnation solution was mixed evenly with the support and allowed to stand for 3h. The mixture was dried at 120°C for 5h to prepare a catalyst with a particle size of 1.6 mm and a butterfly shape. The pore volume of pores with a pore diameter in the range of 100-300 nm of the catalyst accounted for 15% of the total pore volume of the catalyst.

The support used in Example I-9 was the same as that in Example I-1.

The prepared catalyst had a $MoO_3$ content of 30.0 wt%, a NiO content of 4.5 wt%, a Ni/(Ni+Mo) atomic ratio of 0.22, and a $P_2O_5$ content of 7.0 wt%, in which 30 wt% of $P_2O_5$ was originated from the support. The molar ratio of ethylene glycol to the metal element of Group VIB was 0.3:1, and the molar ratio of citric acid to nickel element was 1:1. The catalyst was subjected to the temperature-programmed oxidation test, and $CO_2$ release peaks appeared at 243°C and 342°C, respectively, and the ratio of their peak heights in the spectrum was 0.73:1.

After the catalyst was sulphurized and tested by reaction, the nitrogen content in the product was 3.7 ppm. The reaction conditions were kept stable and the activity retention was 87.7% after 12 days of reaction.

Example I-10

A certain amount of $MoO_3$, basic nickel carbonate, ethylene glycol, and citric acid were added to an aqueous solution containing phosphoric acid, respectively. The mixture was heated and stirred at 85°C for 3h until completely dissolved, to obtain an impregnation solution containing active metals. The impregnation solution was mixed evenly with the support and allowed to stand for 3h. The mixture was dried at 120°C for 5h to prepare a catalyst with a particle size of 1.6 mm and a butterfly shape. The pore volume of pores with a pore diameter in the range of 100-300 nm of the catalyst accounted for 1.2% of the total pore volume of the catalyst.

The support used to prepare the catalyst was a γ-alumina support, with a water absorption rate of 0.96 mL/g, a specific surface area of 285 $m^2$/g, an average pore diameter of 12.6 nm, and the pore volume of pores with a pore diameter in the range of 100-300 nm accounting for 1% of the total pore volume. The sodium oxide content in the support was 0.05 wt%. The alumina support used to prepare the catalyst contained phosphorus element, which was originated from the pseudo-boehmite powders used to prepare the support, and the phosphorus-containing pseudo-boehmite powders were prepared by introducing a certain amount of phosphoric acid during the preparation of the pseudo-boehmite powders. The phosphorus-containing pseudo-boehmite powders were molded and calcined at 600°C for 3h to obtain the phosphorus-containing alumina support.

The prepared catalyst had a $MoO_3$ content of 30.0 wt%, a NiO content of 4.5 wt%, a Ni/(Ni+Mo) atomic ratio of 0.22, and a $P_2O_5$ content of 7.0 wt%, in which 30 wt% of $P_2O_5$ was originated from the support. The molar ratio of ethylene glycol to the metal element of Group VIB was 1.0:1, and the molar ratio of citric acid to nickel element was 0.8:1. The catalyst was subjected to the temperature-programmed oxidation test, and $CO_2$ release peaks appeared at 248°C and 343°C, respectively, and the ratio of their peak heights in the spectrum was 2.4:1.

After the catalyst was sulphurized and tested by reaction, the nitrogen content in the product was 3.2 ppm. The reaction conditions were kept stable and the activity retention was 84.8% after 12 days of reaction.

Example I-11

A certain amount of $MoO_3$, basic nickel carbonate, ethylene glycol, citric acid, and ammonium meta-tungstate were added to an aqueous solution containing phosphoric acid, respectively. The mixture was heated and stirred at 90°C for 2h until completely dissolved, to obtain an impregnation solution containing active metals. The impregnation solution was mixed evenly with the support and allowed to stand for 3h. The mixture was dried at 120°C for 5h to prepare a catalyst with a particle size of 1.6 mm and a butterfly shape. The pore volume of pores with a pore diameter in the range of 100-300 nm of the catalyst accounted for 18% of the total pore volume of the catalyst.

The support used to prepare the catalyst was the same as that in Example I-1. The prepared catalyst had a $MoO_3$ content of 4%, a $WO_3$ content of 26.0 wt%, a NiO content of 4.4 wt%, a Ni/(Ni+Mo+W) atomic ratio of 0.30, and a $P_2O_5$ content of 6.0 wt%, in which 20 wt% of $P_2O_5$ was originated from the support. The molar ratio of ethylene glycol to the metal elements of Group VIB was 1.5:1, and the molar ratio of citric acid to nickel element was 1:1. The catalyst was subjected to the temperature-programmed oxidation test, and $CO_2$ release peaks appeared at 233°C and 350°C, respectively, and the ratio of their peak heights in the spectrum was 2.8:1.

After the catalyst was sulphurized and tested by reaction, the nitrogen content in the product was 1.2 ppm. The reaction conditions were kept stable and the activity retention was 88.0% after 12 days of reaction.

Comparative Example I-1

A certain amount of $MoO_3$, basic nickel carbonate and citric acid were added to an aqueous solution containing phosphoric acid, respectively. The mixture was heated and stirred at 95°C for 2h until completely dissolved, to obtain an impregnation solution containing active metals. The impregnation solution was mixed evenly with the support and then allowed to stand for 3h. The mixture was dried at 120°C for 5h to prepare a catalyst with a particle size of 1.6 mm and a butterfly shape. The pore volume of pores with a pore diameter in the range of 100-300 nm of the catalyst accounted for 15% of the total pore volume of the catalyst.

The support used in Comparative Example I-1 was the same as that in Example I-1.

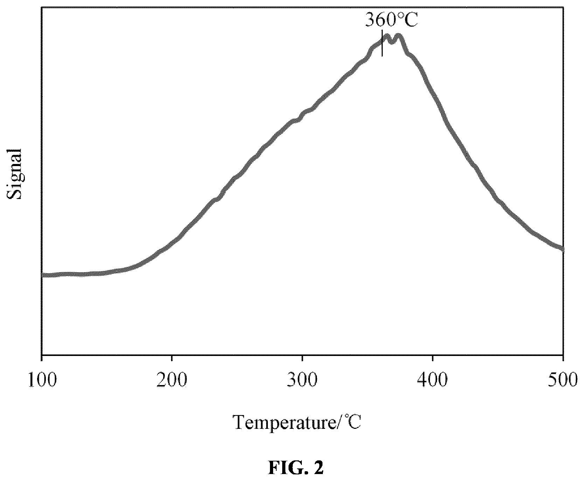

The prepared catalyst had a $MoO_3$ content of 30.0 wt%, a NiO content of 4.5 wt%, a Ni/(Ni+Mo) atomic ratio of 0.22, and a $P_2O_5$ content of 7.0 wt%, in which 30 wt% of $P_2O_5$ was originated from the support. The molar ratio of citric acid to nickel element was 0.8:1. The catalyst was subjected to the temperature-programmed oxidation test, and a $CO_2$ release peak appeared at 360°C (see FIG. 2 ).

After the catalyst was sulphurized and tested by reaction, the nitrogen content in the product was 7.9 ppm. The reaction conditions were kept stable and the activity retention was 81.0% after 12 days of reaction.

Comparative Example I-2

A certain amount of $MoO_3$, basic nickel carbonate and glycerol were added to an aqueous solution containing phosphoric acid, respectively. The mixture was heated and stirred at 95°C for 2h until completely dissolved, to obtain an impregnation solution containing active metals. The impregnation solution was mixed evenly with the support and allowed to stand for 3h. The mixture was dried at 120°C for 5h to prepare a catalyst with a particle size of 1.6 mm and a butterfly shape. The pore volume of pores with a pore diameter in the range of 100-300 nm of the catalyst accounted for 15% of the total pore volume of the catalyst.

The support used in Comparative Example I-2 was the same as that in Example I-1.

The prepared catalyst had a $MoO_3$ content of 24.0 wt%, a NiO content of 7 wt%, a Ni/(Ni+Mo) atomic ratio of 0.36, a $P_2O_5$ content of 6.5 wt%, in which 20 wt% of $P_2O_5$ was originated from the support. The molar ratio of glycerol to molybdenum element was 0.67:1.

The catalyst was subjected to the temperature-programmed oxidation test, and a $CO_2$ release peak appeared at 235°C.

After the catalyst was sulphurized and tested by reaction, the nitrogen content in the product was 10.2 ppm. The reaction conditions were kept stable and the activity retention was 78.5% after 12 days of reaction.

Comparative Example I-3

A certain amount of $MoO_3$, basic nickel carbonate and citric acid were added to an aqueous solution containing phosphoric acid, respectively. The mixture was heated and stirred at 95°C for 2h until completely dissolved, to obtain an impregnation solution containing active metals. The impregnation solution was mixed evenly with the support and then allowed to stand for 3h. The mixture was dried at 120°C for 5h to prepare a catalyst with a particle size of 1.6 mm and a butterfly shape. The pore volume of pores with a pore diameter in the range of 100-300 nm of the catalyst accounted for 30% of the total pore volume of the catalyst.

The support used in Comparative Example I-3 was prepared in the same manner as the support in Example I-1. The support was a γ-alumina support, with a water absorption rate of 1.3 mL/g, a specific surface area of 270 $m^2$/g, an average pore diameter of 16.5 nm, and the pore volume of pores with a pore diameter in the range of 100-300 nm accounting for 25% of the total pore volume. The sodium oxide content in the support was 0.05 wt%.

The prepared catalyst had a $MoO_3$ content of 30.0 wt%, a NiO content of 4.5 wt%, a Ni/(Ni+Mo) atomic ratio of 0.22, a $P_2O_5$ content of 7.0 wt%, in which 30 wt% of $P_2O_5$ was originated from the support. The molar ratio of citric acid to nickel element was 0.8:1. The catalyst was subjected to the temperature-programmed oxidation test, and a $CO_2$ release peak appeared at 365°C.

After the catalyst was sulphurized and tested by reaction, the nitrogen content in the product was 9.2 ppm. The reaction conditions were kept stable and the activity retention was 79.7% after 12 days of reaction.

Comparative Example I-4

The catalyst of Example I-1 was calcined at 400°C for 3h. The catalyst contained substantially no organic matter. The activity of the calcined catalyst was evaluated. After the catalyst was sulphurized and tested for reaction, the nitrogen content of the product was 105 ppm. The reaction conditions were kept stable, and the activity retention was 80.5% after 12 days of reaction.

Table I-1 Properties of the catalysts obtained in Examples I-1 to I-11 and Comparative Examples I-1 to I-4

| Example No. | Group VIB metal content, wt% | Group VIII metal content, wt% | Atomic ratio of Group VIII metal to the total amount of Group VIII and VIB metals | Atomic ratio of Ni to the total amount of Group VIII metal | $P_2O_5$ content, wt% | Proportion of $P_2O_5$ content in the support to the total content, % | Molar ratio of alcohol to Group VIB metal | Molar ratio of carboxylic acid/amine to Group VIII metal | Proportion of pore volume of pores with a pore diameter in the range of 100-300 nm of the catalyst to the total pore volume of the catalyst, % | Position of $CO_2$ release peak in temperature-programmed oxidation test | Ratio of peak height |
|---|---|---|---|---|---|---|---|---|---|---|---|
| Example I-1 | MoO$_3$, 30.0 | NiO, 4.5 | 0.22 | 1 | 7.0 | 30 | 1.5:1 | 1:1 | 15 | 238°C and 345°C | 3.5:1 |
| Example I-2 | MoO$_3$, 24.0 | NiO, 7.0 | 0.36 | 1 | 6.5 | 20 | 1.2:1 | 1.5:1 | 15 | 240°C and 340°C | 3.3:1 |
| Example I-3 | MoO$_3$, 38.0 | NiO, 6.5 | 0.25 | 1 | 5.0 | 10 | 0.6:1 | 1.2:1 | 15 | 230°C and 348°C | 1.9:1 |
| Example I-4 | MoO$_3$, 26.0 | NiO, 5.5 | 0.29 | 1 | 4.5 | 10 | 1:1 | 1:1 | 15 | 230°C and 332°C | 2.7:1 |
| Example I-5 | MoO$_3$, 26.0 | NiO, 5.5 | 0.29 | 1 | 5.9 | 0 | 0.8:1 | 1:1 | 10 | 240°C and 345°C | 1.2:1 |
| Example I-6 | MoO$_3$, 26.0 | NiO, 3.0 FeO, 2.4 | 0.29 | 0.55 | 5.9 | 18 | 1.8:1 | 1:1 | 15 | 242°C and 340°C | 1.5:1 |
| Example I-7 | MoO$_3$, 26.0 | NiO, 5.5 RuO2, 0.8 | 0.306 | 0.925 | 7 | 30 | 1.5:1 | 0.8:1 | 15 | 248°C and 340°C | 2.6:1 |
| Example I-8 | MoO$_3$, 22.0 | NiO, 7.9 | 0.41 | 1 | 7.5 | 20 | 1:1 | 0.8:1 | 15 | 240°C and 335°C | 1.7:1 |
| Example I-9 | MoO$_3$, 30.0 | NiO, 4.5 | 0.22 | 1 | 7.0 | 30 | 0.3:1 | 1:1 | 15 | 243°C and 342°C | 0.73:1 |
| Example I-10 | MoO$_3$, 30.0 | NiO, 4.5 | 0.22 | 1 | 7.0 | 30 | 1.0:1 | 0.8:1 | 1.2 | 248°C and 343°C | 2.4:1 |
| Example I-11 | MoO$_3$, 4; WO$_3$, 26 | NiO, 4.4 | 0.3 | 1 | 6.0 | 20 | 1.5:1 | 1:1 | 18 | 233°C and 350°C | 2.8:1 |
| Comparative Example I-1 | MoO$_3$, 30.0 | NiO, 4.5 | 0.22 | 1 | 7.0 | 30 | - | 0.8:1 | 15 | 360°C | - |

EP 4 556 548 A1

(continued)

| Example No. | Group VIB metal content, wt% | Group VIII metal content, wt% | Atomic ratio of Group VIII metal to the total amount of Group VIII and VIB metals | Atomic ratio of Ni to the total amount of Group VIII metal | $P_2O_5$ content, wt% | Proportion of $P_2O_5$ content in the support to the total content, % | Molar ratio of alcohol to Group VIB metal | Molar ratio of carboxylic acid/amine to Group VIII metal | Proportion of pore volume of pores with a pore diameter in the range of 100-300 nm of the catalyst to the total pore volume of the catalyst, % | Position of $CO_2$ release peak in temperature-programmed oxidation test | Ratio of peak height |
|---|---|---|---|---|---|---|---|---|---|---|---|
| Comparative Example I-2 | $MoO_3$, 24.0 | NiO, 7 | 0.36 | 1 | 6.5 | 20 | 0.67:1 | - | 15 | 235°C | - |
| Comparative Example I-3 | $MoO_3$, 30.0 | NiO, 4.5 | 0.22 | 1 | 7.0 | 30 | - | 0.8:1 | 30 | 365°C | - |
| Comparative Example I-4 | $MoO_3$, 30.0 | NiO, 4.5 | 0.22 | 1 | 7.0 | 30 | - | - | - | - | - |

Table I-2 Hydrodenitrogenation test results of Examples I-1 to 1-11 and Comparative Examples I-1 to I-4

| Example No. | Nitrogen content in product, ppm | Activity retention after 12 days of reaction,% |
|---|---|---|
| Example I-1 | 1.5 | 89.5 |
| Example I-2 | 1.8 | 88.6 |
| Example I-3 | 0.9 | 86.5 |
| Example I-4 | 1.9 | 87.5 |
| Example I-5 | 2.1 | 85.3 |
| Example I-6 | 3.5 | 84.3 |
| Example I-7 | 1.3 | 87.9 |
| Example I-8 | 2.8 | 83.5 |
| Example I-9 | 3.7 | 87.7 |
| Example I-10 | 3.2 | 84.8 |
| Example I-11 | 1.2 | 88.0 |
| Comparative Example I-1 | 7.9 | 81.0 |
| Comparative Example I-2 | 10.2 | 78.5 |
| Comparative Example I-3 | 9.2 | 79.7 |
| Comparative Example I-4 | 105 | 80.5 |

It can be seen from the test results in Table I-2 that, compared with the catalysts not in accordance with the present application, the catalysts of the first preferred embodiment according to the first aspect of the present application exhibit higher hydrodenitrogenation activity and stability.

Example II series

The following Example II series further describe the preparation and use of the hydrogenation catalyst according to the second preferred embodiment of the first aspect of the present application, wherein:

The hydrodesulphurization performance of the catalyst was tested in a high-throughput hydrodesulphurization reaction device. First, the oxidized catalyst was converted into a sulphurized catalyst by a temperature-programmed sulphurization method. The sulphurization conditions were as follows: the sulphurization pressure was 3.2MPa, the sulphurized oil was kerosene containing 2 wt% of $CS_2$, the volume space velocity was $2h^{-1}$, the hydrogen-oil volume ratio was 300v/v, and the temperature was first kept constant at 230 °C for 6h, and then raised to 360 °C for sulphurization for 8h. The heating rate for each stage was 10°C/h. After sulphurization, the reaction raw material was switched to carry out the hydrodesulphurization activity test. In the distillate oil to be treated, the straight-run diesel content was 100 wt%, the catalytic diesel content was 0 wt%, and the sulfur content was 17000 ppm. The test conditions were: a pressure of 3.2MPa, a volume space velocity of $0.8h^{-1}$, a hydrogen-oil volume ratio of 150v/v, and a reaction temperature of 370°C. The product properties were analyzed after the reaction was stable for 15 days.

The composition of the catalyst was calculated based on the feed amount. The pore distribution, pore diameter and pore volume of pores within 2-100 nm in the catalyst and the support were determined by low-temperature nitrogen adsorption method (referring to ASTM D3663, ASTM D4641, GB/T 21650.1-2008 standards). The sulfur mass fraction in the product was analyzed using a sulfur-nitrogen analyzer (produced by Thermo Fisher Scientific, model TN/TS3000), and the hydrogen and hydrogen mass fractions were measured by an elemental analyzer (produced by Elementar, model Vario EL cube).

The $CO_2$ release peak was measured by temperature-programmed oxidation method. The analysis was performed on a NETZSCH STA 409 PC/PG instrument. The sample was heated in an air atmosphere (at a heating rate of 10°C/min over a heating range of 50-800°C), and was monitored at the gas outlet of the instrument by a mass spectrometer to obtain a curve of $CO_2$ produced by sample decomposition as a function of temperature.

The calculation formula for the reaction hydrogen consumption was: $C_f/C_p \times H_p - H_f + 16 \times (S_f - C_f/C_p \times S_p) \times 10^{-6} + 5.67 \times (N_f - C_f/C_p \times N_p) \times 10^{-6}$, wherein $C_f$ and $C_p$ were the carbon contents of the raw material and the product, respectively; $H_f$ and $H_p$ were the H contents of the raw material and the product, respectively; $S_f$ and $S_p$ were the sulfur contents of the raw material and the product, respectively; and $N_f$ and $N_p$ were the nitrogen contents of the raw material and the product, respectively.

Example II-1

A certain amount of $MoO_3$, basic cobalt carbonate, ethylene glycol, and citric acid were added to an aqueous solution containing phosphoric acid, respectively. The mixture was heated and stirred at 85°C for 3h until completely dissolved, to obtain an impregnation solution containing active metals. The impregnation solution was mixed evenly with the support and allowed to stand for 3h. The mixture was dried at 120°C for 5h to prepare a catalyst with a particle size of 1.6 mm and a butterfly shape.

The support used to prepare the catalyst was a γ-alumina support, with a water absorption rate of 1.02 mL/g, a specific surface area of 275 m²/g, an average pore diameter of 12.5 nm, the pore volume of pores with a pore diameter in the range of 2-6 nm accounting for 6.0% of the total pore volume, and the pore volume of pores with a pore diameter in the range of 2-4 nm accounting for 2% of the total pore volume. The sodium oxide content in the support was 0.05 wt%. The alumina support used to prepare the catalyst contained phosphorus element, which was originated from the pseudo-boehmite powders used to prepare the support, and the phosphorus-containing pseudo-boehmite powders were prepared by introducing a certain amount of phosphoric acid during the preparation of the pseudo-boehmite powders. The phosphorus-containing pseudo-boehmite powders were molded and calcined at 600°C for 3h to obtain the phosphorus-containing alumina support.

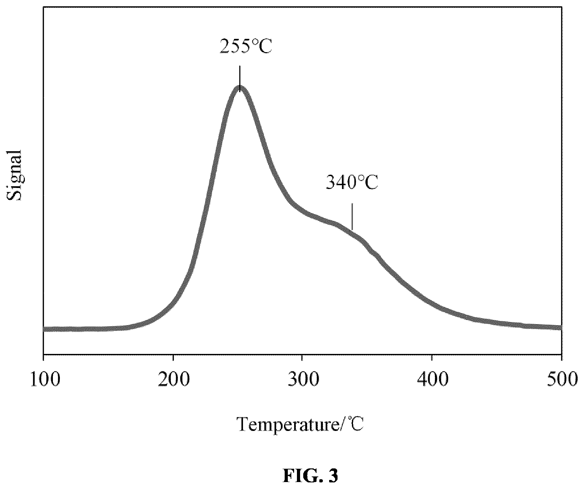

The prepared catalyst had a $MoO_3$ content of 28.0 wt%, a CoO content of 4.9 wt%, a Co/(Co+Mo) atomic ratio of 0.25, a $P_2O_5$ content of 5.0 wt%, in which 30 wt% of $P_2O_5$ was originated from the support. The molar ratio of ethylene glycol to the metal element of Group VIB was 1:1, and the molar ratio of citric acid to the cobalt element was 0.8:1. The catalyst was subjected to the temperature-programmed oxidation test. As shown in FIG. 3, $CO_2$ release peaks appeared at 255°C and 340°C, respectively, and the ratio of their peak heights in the spectrum was 2.2:1.

After the catalyst was sulphurized and tested for reaction, the sulfur content in the product was 6.5 ppm. By measuring the carbon, hydrogen, sulfur and nitrogen contents in the product and the raw material and by means of the aforementioned hydrogen consumption calculation formula, the reaction hydrogen consumption was calculated to be 0.60%.

Example II-2

A certain amount of $MoO_3$, basic cobalt carbonate, glycerol, and acetic acid were added to an aqueous solution containing phosphoric acid, respectively. The mixture was heated and stirred at 90°C for 3h until completely dissolved, to obtain an impregnation solution containing active metals. The impregnation solution was mixed evenly with the support and allowed to stand for 5h. The mixture was dried at 120°C for 5h to prepare a catalyst with a particle size of 1.6 mm and a butterfly shape.

The support used in Example II-2 was the same as that in Example II-1.

The prepared catalyst had a $MoO_3$ content of 15.0 wt%, a CoO content of 3.8 wt%, a Co/(Co+Mo) atomic ratio of 0.33, and a $P_2O_5$ content of 8.0 wt%, in which 30 wt% of $P_2O_5$ was originated from the support. The molar ratio of glycerol to the Group VIB metal was 2:1, and the molar ratio of acetic acid to cobalt element was 3:1. The catalyst was subjected to the temperature-programmed oxidation test, and $CO_2$ release peaks appeared at 245°C and 325°C, respectively, and the ratio of their peak heights in the spectrum was 3.5:1.

After the catalyst was sulphurized and tested by reaction, the sulfur content in the product was 5.8 ppm. By measuring the carbon, hydrogen, sulfur and nitrogen contents in the product and the raw material and by means of the aforementioned hydrogen consumption calculation formula, the reaction hydrogen consumption was calculated to be 0.63%.

Example II-3

A certain amount of $MoO_3$, basic cobalt carbonate, butanol, and acetic acid were added to an aqueous solution containing phosphoric acid, respectively. The mixture was heated and stirred at 95°C for 3h until completely dissolved, to obtain an impregnation solution containing active metals. The impregnation solution was mixed evenly with the support and allowed to stand for 5h. The mixture was dried at 120°C for 5h to prepare a catalyst with a particle size of 1.6 mm and a butterfly shape.

The support used in Example II-3 was the same as that in Example II-1.

The prepared catalyst had a $MoO_3$ content of 24.0 wt%, a CoO content of 6.0 wt%, a Co/(Co+Mo) atomic ratio of 0.32, a $P_2O_5$ content of 5.0 wt%, in which 10 wt% of $P_2O_5$ was originated from the support. The molar ratio of butanol to the Group VIB metal was 1:1, and the molar ratio of acetic acid to cobalt element was 1.6:1. The catalyst was subjected to the temperature-programmed oxidation test, and $CO_2$ release peaks appeared at 230°C and 325°C, respectively, and the ratio of their peak heights in the spectrum was 4.2:1.

After the catalyst was sulphurized and tested by reaction, the sulfur content in the product was 7.0 ppm. By measuring the carbon, hydrogen, sulfur and nitrogen contents in the product and the raw material and by means of the aforementioned hydrogen consumption calculation formula, the reaction hydrogen consumption was calculated to be 0.58%.

Example II-4

A certain amount of $MoO_3$, basic cobalt carbonate, butanol, and triethanolamine were added to an aqueous solution containing phosphoric acid, respectively. The mixture was heated and stirred at 85°C for 3h until completely dissolved, to obtain an impregnation solution containing active metals. The impregnation solution was mixed evenly with the support and allowed to stand for 4h. The mixture was dried at 120°C for 5h to prepare a catalyst with a particle size of 1.6 mm and a butterfly shape.

The support used in Example II-4 was the same as that in Example II-1.

The prepared catalyst had a $MoO_3$ content of 24.0 wt%, a CoO content of 6.0 wt%, a Co/(Co+Mo) atomic ratio of 0.32, a $P_2O_5$ content of 7.0 wt%, in which 10 wt% of $P_2O_5$ was originated from the support. The molar ratio of butanol to the Group VIB metal was 2:1, and the molar ratio of triethanolamine to cobalt element was 1:1. The catalyst was subjected to the temperature-programmed oxidation test, and $CO_2$ release peaks appeared at 245°C and 335°C, respectively, and the ratio of their peak heights in the spectrum was 4.5:1.

After the catalyst was sulphurized and tested by reaction, the sulfur content in the product was 7.9 ppm. By measuring the carbon, hydrogen, sulfur and nitrogen contents in the product and the raw material and by means of the aforementioned hydrogen consumption calculation formula, the reaction hydrogen consumption was calculated to be 0.64%.

Example II-5

A certain amount of $MoO_3$, basic cobalt carbonate, butanol, and acetic acid were added to an aqueous solution containing phosphoric acid, respectively. The mixture was heated and stirred at 90°C for 4h until completely dissolved, to obtain an impregnation solution containing active metals. The impregnation solution was mixed evenly with the support and allowed to stand for 5h. The mixture was dried at 120°C for 3h to prepare a catalyst with a particle size of 1.6 mm and a butterfly shape.

The support used to prepare the catalyst was a $\gamma$-alumina support, with a water absorption rate of 1.08 mL/g, a specific surface area of 282 $m^2$/g, an average pore diameter of 11.9 nm, the pore volume of pores with a pore diameter in the range of 2-6 nm accounting for 4.9% of the total pore volume, and the pore volume of pores with a pore diameter in the range of 2-4 nm accounting for 1.5% of the total pore volume. The sodium oxide content in the support was 0.05%. The support used to prepare the catalyst was a phosphorus-containing alumina support, and the introduction of phosphorus in the support was achieved by adding a certain amount of phosphoric acid to the alumina for modification and calcining at 600°C for 3h.

The prepared catalyst had a $MoO_3$ content of 24.0 wt%, a CoO content of 6.0 wt%, a Co/(Co+Mo) atomic ratio of 0.32, a $P_2O_5$ content of 5.0 wt%, in which 10 wt% of $P_2O_5$ was originated from the support. The molar ratio of butanol to the Group VIB metal was 1:1, and the molar ratio of acetic acid to cobalt element was 3:1. The catalyst was subjected to the temperature-programmed oxidation test, and $CO_2$ release peaks appeared at 230°C and 325°C, respectively, and the ratio of their peak heights in the spectrum was 2.6:1.

After the catalyst was sulphurized and tested by reaction, the sulfur content in the product was 8.9 ppm. By measuring the carbon, hydrogen, sulfur and nitrogen contents in the product and the raw material and by means of the aforementioned hydrogen consumption calculation formula, the reaction hydrogen consumption was calculated to be 0.60%.

Example II-6

A certain amount of $MoO_3$, basic cobalt carbonate, butanol, and acetic acid were added to an aqueous solution containing phosphoric acid, respectively. The mixture was heated and stirred at 95°C for 3h until completely dissolved, to obtain an impregnation solution containing active metals. The impregnation solution was mixed evenly with the support and allowed to stand for 5h. The mixture was dried at 120°C for 5h to prepare a catalyst with a particle size of 1.6 mm and a butterfly shape.

The support used to prepare the catalyst was a $\gamma$-alumina support, with a water absorption rate of 0.97 mL/g, a specific surface area of 280 $m^2$/g, an average pore diameter of 11.7 nm, the pore volume of pores with a pore diameter in the range of 2-6 nm accounting for 7.2% of the total pore volume, and the pore volume of pores with a pore diameter in the range of 2-4 nm accounting for 2.5% of the total pore volume. The sodium oxide content in the support was 0.05%. The alumina support used to prepare the catalyst did not contain phosphorus element.

The prepared catalyst had a $MoO_3$ content of 24.0 wt%, a CoO content of 6.0 wt%, a Co/(Co+Mo) atomic ratio of 0.32, and a $P_2O_5$ content of 5.0 wt%. The molar ratio of butanol to the Group VIB metal was 1:1, and the molar ratio of acetic acid to the cobalt element was 1:1. The catalyst was subjected to the temperature-programmed oxidation test, and $CO_2$ release peaks appeared at 230°C and 325°C, respectively, and the ratio of their peak heights in the spectrum was 2.1:1.

After the catalyst was sulphurized and tested by reaction, the sulfur content in the product was 9.5 ppm. By measuring the carbon, hydrogen, sulfur and nitrogen contents in the product and the raw material and by means of the aforementioned hydrogen consumption calculation formula, the reaction hydrogen consumption was calculated to be 0.56%.

Example II-7

A certain amount of $MoO_3$, basic cobalt carbonate, basic nickel carbonate, ethylene glycol, and citric acid were added to an aqueous solution containing phosphoric acid, respectively. The mixture was heated and stirred at 85°C for 3h until completely dissolved, to obtain an impregnation solution containing active metals. The impregnation solution was mixed evenly with the support and allowed to stand for 3h. The mixture was dried at 120°C for 5h to prepare a catalyst with a particle size of 1.6 mm and a butterfly shape.

The support used to prepare the catalyst was a $\gamma$-alumina support, with a water absorption rate of 1.02 mL/g, a specific surface area of 275 $m^2$/g, an average pore diameter of 12.5 nm, the pore volume of pores with a pore diameter in the range of 2-6 nm accounting for 6.0% of the total pore volume, and the pore volume of pores with a pore diameter in the range of 2-4 nm accounting for 2% of the total pore volume. The sodium oxide content in the support was 0.05 wt%. The alumina support used to prepare the catalyst contained phosphorus element, which was originated from the pseudo-boehmite powders used to prepare the support, and the phosphorus-containing pseudo-boehmite powders were prepared by introducing a certain amount of phosphoric acid during the preparation of the pseudo-boehmite powders. The phosphorus-containing pseudo-boehmite powders were molded and calcined at 600°C for 3h to obtain the phosphorus-containing alumina support.

The prepared catalyst had a $MoO_3$ content of 28.0 wt%, a CoO content of 3 wt%, a NiO content of 2 wt%, a (Co+Ni)/(Co+Ni+Mo) atomic ratio of 0.256, a Co/(Co+Ni) atomic ratio of 0.6, a $P_2O_5$ content of 5.0 wt%, in which 30 wt% of $P_2O_5$ was originated from the support. The molar ratio of ethylene glycol to the metal element of Group VIB was 1.5:1, and the molar ratio of citric acid to the sum of cobalt and nickel elements was 0.8:1. The catalyst was subjected to the temperature-programmed oxidation test, and $CO_2$ release peaks appeared at 255°C and 340°C, respectively, and the ratio of their peak heights in the spectrum was 4.3:1.

After the catalyst was sulphurized and tested for reaction, the sulfur content in the product was 14.5 ppm. By measuring the carbon, hydrogen, sulfur and nitrogen contents in the product and the raw material and by means of the aforementioned hydrogen consumption calculation formula, the reaction hydrogen consumption was calculated to be 0.65%.

Example II-8

A certain amount of $MoO_3$, basic cobalt carbonate, butanol, and acetic acid were added to an aqueous solution containing phosphoric acid, respectively. The mixture was heated and stirred at 95°C for 3h until completely dissolved, to obtain an impregnation solution containing active metals. The impregnation solution was mixed evenly with the support and allowed to stand for 5h. The mixture was dried at 120°C for 5h to prepare a catalyst with a particle size of 1.6 mm and a butterfly shape.

The support used to prepare the catalyst was a $\gamma$-alumina support, with a water absorption rate of 0.97 mL/g, a specific surface area of 280 $m^2$/g, an average pore diameter of 11.7 nm, the pore volume of pores with a pore diameter in the range of 2-6 nm accounting for 7.2% of the total pore volume, and the pore volume of pores with a pore diameter in the range of 2-4 nm accounting for 2.5% of the total pore volume. The sodium oxide content in the support was 0.05%. The alumina support used to prepare the catalyst did not contain phosphorus element.

The prepared catalyst had a $MoO_3$ content of 23.5 wt%, a CoO content of 4.5 wt%, a Co/(Co+Mo) atomic ratio of 0.27, a $P_2O_5$ content of 12.0 wt%, a molar ratio of butanol to Group VIB metal of 1:1, and a molar ratio of acetic acid to cobalt element of 1:1. The catalyst was subjected to the temperature-programmed oxidation test, and $CO_2$ release peaks appeared at 230°C and 325°C, respectively, and the ratio of their peak heights in the spectrum was 1.5:1.

After the catalyst was sulphurized and tested by reaction, the sulfur content in the product was 16.0 ppm. By measuring the carbon, hydrogen, sulfur and nitrogen contents in the product and the raw material and by means of the aforementioned hydrogen consumption calculation formula, the reaction hydrogen consumption was calculated to be 0.59%.

Example II-9

A certain amount of $MoO_3$, basic cobalt carbonate, glycerol, and acetic acid were added to an aqueous solution containing phosphoric acid, respectively. The mixture was heated and stirred at 90°C for 3h until completely dissolved, to obtain an impregnation solution containing active metals. The impregnation solution was mixed evenly with the support and allowed to stand for 5h. The mixture was dried at 120°C for 5h to prepare a catalyst with a particle size of 1.6 mm and a butterfly shape.

The support used to prepare the catalyst was a γ-alumina support, with a water absorption rate of 1.02 mL/g, a specific surface area of 275 $m^2$/g, an average pore diameter of 12.5 nm, the pore volume of pores with a pore diameter in the range of 2-6 nm accounting for 6% of the total pore volume, and the pore volume of pores with a pore diameter in the range of 2-4 nm accounting for 2% of the total pore volume. The sodium oxide content in the support was 0.05 wt%. The alumina support used to prepare the catalyst contained phosphorus element, which was originated from the pseudo-boehmite powders used to prepare the support, and the phosphorus-containing pseudo-boehmite powders were prepared by introducing a certain amount of phosphoric acid during the preparation of the pseudo-boehmite powders. The phosphorus-containing pseudo-boehmite powders were molded and calcined at 600°C for 3h to obtain the phosphorus-containing alumina support.

The prepared catalyst had a $MoO_3$ content of 25.0 wt%, a CoO content of 2.0 wt%, a Co/(Co+Mo) atomic ratio of 0.13, a $P_2O_5$ content of 6.0 wt%, in which 30 wt% of $P_2O_5$ was originated from the support. The molar ratio of glycerol to the Group VIB metal was 0.8:1, and the molar ratio of acetic acid to cobalt element was 3:1. The catalyst was subjected to the temperature-programmed oxidation test, and $CO_2$ release peaks appeared at 245°C and 325°C, respectively, and the ratio of their peak heights in the spectrum was 3.6:1.

After the catalyst was sulphurized and tested by reaction, the sulfur content in the product was 17.6 ppm. By measuring the carbon, hydrogen, sulfur and nitrogen contents in the product and the raw material and by means of the aforementioned hydrogen consumption calculation formula, the reaction hydrogen consumption was calculated to be 0.52%.

Example II-10

A certain amount of $MoO_3$, basic cobalt carbonate, glycerol, and acetic acid were added to an aqueous solution containing phosphoric acid, respectively. The mixture was heated and stirred at 90°C for 3h until completely dissolved, to obtain an impregnation solution containing active metals. The impregnation solution was mixed evenly with the support and allowed to stand for 5h. The mixture was dried at 120°C for 5h to prepare a catalyst with a particle size of 1.6 mm and a butterfly shape.

The support used to prepare the catalyst was a γ-alumina support, with a water absorption rate of 1.02 mL/g, a specific surface area of 275 $m^2$/g, an average pore diameter of 12.5 nm, the pore volume of pores with a pore diameter in the range of 2-6 nm accounting for 6% of the total pore volume, and the pore volume of pores with a pore diameter in the range of 2-4 nm accounting for 2% of the total pore volume. The sodium oxide content in the support was 0.05 wt%. The alumina support used to prepare the catalyst contained phosphorus element, which was originated from the pseudo-boehmite powders used to prepare the support, and the phosphorus-containing pseudo-boehmite powders were prepared by introducing a certain amount of phosphoric acid during the preparation of the pseudo-boehmite powders. The phosphorus-containing pseudo-boehmite powders were molded and calcined at 600°C for 3h to obtain the phosphorus-containing alumina support.

The prepared catalyst had a $MoO_3$ content of 15.0 wt%, a CoO content of 3.8 wt%, a Co/(Co+Mo) atomic ratio of 0.33, and a $P_2O_5$ content of 8.0 wt%, in which 30 wt% of $P_2O_5$ was originated from the support. The molar ratio of glycerol to the Group VIB metal was 2.2:1, and the molar ratio of acetic acid to the cobalt element was 1:1. The catalyst was subjected to the temperature-programmed oxidation test, and $CO_2$ release peaks appeared at 245°C and 325°C, respectively, and the ratio of their peak heights in the spectrum was 7.2:1.

After the catalyst was sulphurized and tested by reaction, the sulfur content in the product was 12.5 ppm. By measuring the carbon, hydrogen, sulfur and nitrogen contents in the product and the raw material and by means of the aforementioned hydrogen consumption calculation formula, the reaction hydrogen consumption was calculated to be 0.62%.

Comparative Example II-1

A certain amount of $MoO_3$, basic cobalt carbonate, basic nickel carbonate and citric acid were added to an aqueous solution containing phosphoric acid, respectively. The mixture was heated and stirred at 95°C for 2h until completely dissolved, to obtain an impregnation solution containing active metals. The impregnation solution was mixed evenly with the support and allowed to stand for 3h. The mixture was dried at 120°C for 5h to prepare a catalyst with a particle size of 1.6 mm and a butterfly shape.

The phosphorus-containing alumina support selected was the same as the support in Example II-1.

The prepared catalyst had a $MoO_3$ content of 28.0 wt%, a CoO content of 2.0 wt%, a NiO content of 4.0 wt%, a (Co+Ni)/(Co+Ni+Mo) atomic ratio of 0.29, a Co/(Co+Ni) atomic ratio of 0.33, a $P_2O_5$ content of 5.0 wt%, in which 30 wt% of $P_2O_5$ was originated from the support. The molar ratio of citric acid to the Group VIII metals was 0.8:1. The catalyst was subjected to the temperature-programmed oxidation test, and a $CO_2$ release peak appeared at 375°C.

After the catalyst was sulphurized and tested by reaction, the sulfur content in the product was 20.5 ppm. By measuring the carbon, hydrogen, sulfur and nitrogen contents in the product and the raw material and by means of the aforementioned hydrogen consumption calculation formula, the reaction hydrogen consumption was calculated to be 0.73%.

Comparative Example II-2

A certain amount of $MoO_3$, basic nickel carbonate and glycerol were added to an aqueous solution containing phosphoric acid, respectively. The mixture was heated and stirred at 90°C for 3h until completely dissolved, to obtain an impregnation solution containing active metals. The impregnation solution was mixed evenly with the support and allowed to stand for 2h. The mixture was dried at 120°C for 5h to prepare a catalyst with a particle size of 1.6 mm and a butterfly shape.

The phosphorus-containing alumina support selected was the same as the support in Example II-1.

The prepared catalyst had a $MoO_3$ content of 24.0 wt%, a NiO content of 6.0 wt%, a Ni/(Ni+Mo) atomic ratio of 0.33, and a $P_2O_5$ content of 8.0 wt%, in which 15 wt% of $P_2O_5$ was originated from the support. The molar ratio of glycerol to the Group VIB metal was 1:1. The catalyst was subjected to the temperature-programmed oxidation test, and a $CO_2$ release peak appeared at 260°C.

After the catalyst was sulphurized and tested by reaction, the sulfur content in the product was 19.5 ppm. By measuring the carbon, hydrogen, sulfur and nitrogen contents in the product and the raw material and by means of the aforementioned hydrogen consumption calculation formula, the reaction hydrogen consumption was calculated to be 0.75%.

Comparative Example II-3

A certain amount of $MoO_3$, basic nickel carbonate and citric acid were added to an aqueous solution containing phosphoric acid, respectively. The mixture was heated and stirred at 95°C for 3h until completely dissolved, to obtain an impregnation solution containing active metals. The impregnation solution was mixed evenly with the support and allowed to stand for 2h. The mixture was dried at 120°C for 5h to prepare a catalyst with a particle size of 1.6 mm and a butterfly shape.

The phosphorus-containing alumina support selected was the same as the support in Example II-1.

The prepared catalyst had a $MoO_3$ content of 28.0 wt%, a NiO content of 4.9 wt%, a Ni/(Ni+Mo) atomic ratio of 0.25, a $P_2O_5$ content of 5.0 wt%, in which 15 wt% of $P_2O_5$ was originated from the support. The molar ratio of citric acid to the metal element of Group VIII was 1:1. The catalyst was subjected to the temperature-programmed oxidation test, and a $CO_2$ release peak appeared at 360°C.

After the catalyst was sulphurized and tested by reaction, the sulfur content in the product was 25.6 ppm. By measuring the carbon, hydrogen, sulfur and nitrogen contents in the product and the raw material and by means of the aforementioned hydrogen consumption calculation formula, the reaction hydrogen consumption was calculated to be 0.73%.

Comparative Example II-4

A certain amount of $MoO_3$, basic nickel carbonate and ethylenediaminetetraacetic acid were added to an aqueous solution containing phosphoric acid, respectively. The mixture was heated and stirred at 95°C for 3h until completely dissolved, to obtain an impregnation solution containing active metals. The impregnation solution was mixed evenly with the support and allowed to stand for 2h. The mixture was dried at 120°C for 5h to prepare a catalyst with a particle size of 1.6 mm and a butterfly shape. The prepared catalyst was then impregnated with a solution containing ethylenediaminetetraacetic acid and dried at 130°C for 3h.

The phosphorus-containing alumina support selected was the same as the support in Example II-1.

The prepared catalyst had a $MoO_3$ content of 28.0 wt%, a NiO content of 4.9 wt%, a Ni/(Ni+Mo) atomic ratio of 0.25, a $P_2O_5$ content of 5.0 wt%, in which 15 wt% of $P_2O_5$ was originated from the support. The molar ratio of ethylenediaminetetraacetic acid to the metal element of Group VIII was 1:1. The catalyst was subjected to the temperature-programmed oxidation test, and $CO_2$ release peaks appeared at 285°C and 380°C, respectively, and the ratio of their peak heights in the spectrum was 0.92:1.

After the catalyst was sulphurized and tested by reaction, the sulfur content in the product was 22.0 ppm. By measuring the carbon, hydrogen, sulfur and nitrogen contents in the product and the raw material and by means of the aforementioned hydrogen consumption calculation formula, the reaction hydrogen consumption was calculated to be 0.76%.

Table II-1 Properties of the catalysts obtained in Examples II-1 to II-10 and Comparative Examples II-1 to II-4

| Example No. | Group VIB metal content, wt% | Group VIII metal content, wt% | Atomic ratio of Group VIII metal to the total amount of Group VIII and VIB metals | Atomic ratio of Co to the total amount of Group VIII metal | $P_2O_5$ content, wt% | Proportion of $P_2O_5$ content in the support to the total content, % | Molar ratio of alcohol to Group VIB metal | Molar ratio of carboxylic acid/amine to Group VIII metal | Proportion of pore volume with pore diameter of 2-6nm in the support to the total pore volume, % | Proportion of pore volume with pore diameter of 2-4nm in the support to the total pore volume, % | Position of $CO_2$ release peak in temperature-programmed oxidation test | Ratio of peak height |
|---|---|---|---|---|---|---|---|---|---|---|---|---|
| Example II-1 | $MoO_3$, 28.0 | CoO, 4.9 | 0.25 | 1 | 5.0 | 30 | 1:1 | 0.8:1 | 6.0 | 2 | 255°C and 340°C | 2.2:1 |
| Example II-2 | $MoO_3$, 15.0 | CoO, 3.8 | 0.33 | 1 | 8.0 | 30 | 2:1 | 3:1 | 6.0 | 2 | 245°C and 325°C | 3.5:1 |
| Example II-3 | $MoO_3$, 24.0 | CoO, 6.0 | 0.32 | 1 | 5.0 | 10 | 1:1 | 1.6:1 | 6.0 | 2 | 230°C and 325°C | 4.2:1 |
| Example II-4 | $MoO_3$, 24.0 | CoO, 6.0 | 0.32 | 1 | 7.0 | 10 | 2:1 | 1:1 | 6.0 | 2 | 245°C and 335°C | 4.5:1 |
| Example II-5 | $MoO_3$, 24.0 | CoO, 6.0 | 0.32 | 1 | 5.0 | 10 | 1:1 | 3:1 | 4.9 | 1.5 | 230°C and 325°C | 2.6:1 |
| Example II-6 | $MoO_3$, 24.0 | CoO, 6.0 | 0.32 | 1 | 5.0 | 0 | 1:1 | 1:1 | 7.2 | 2.5 | 230°C and 325°C | 2.1:1 |
| Example II-7 | $MoO_3$, 28.0 | CoO, 3 NiO, 2 | 0.256 | 0.6 | 5.0 | 30 | 1.5:1 | 0.8:1 | 6.0 | 2 | 255°C and 340°C | 4.3:1 |
| Example II-8 | $MoO_3$, 23.5 | CoO, 4.5 | 0.27 | 1 | 12.0 | 0 | 1:1 | 1:1 | 7.2 | 2.5 | 230°C and 325°C | 1.5:1 |
| Example II-9 | $MoO_3$, 25.0 | CoO, 2.0 | 0.13 | 1 | 6.0 | 30 | 0.8:1 | 3:1 | 6.0 | 2 | 245°C and 325°C | 3.6:1 |
| Example 11-10 | $MoO_3$, 15.0 | CoO, 3.8 | 0.33 | 1 | 8.0 | 30 | 2.2:1 | 1:1 | 6.0 | 2 | 245°C and 325°C | 7.2:1 |
| Comparative Example II-1 | $MoO_3$, 28.0 | CoO, 2.0 NiO, 4.0 | 0.29 | 0.33 | 5.0 | 30 | - | 0.8:1 | 6.0 | 2 | 375°C | - |
| Comparative Example II-2 | $MoO_3$, 24.0 | CoO, 6.0 | 0.33 | 1 | 8.0 | 15 | 1:1 | - | 6.0 | 2 | 260°C | - |

EP 4 556 548 A1

29

(continued)

| Example No. | Group VIB metal content, wt% | Group VIII metal content, wt% | Atomic ratio of Group VIII metal to the total amount of Group VIII and VIB metals | Atomic ratio of Co to the total amount of Group VIII metal | $P_2O_5$ content, wt% | Proportion of $P_2O_5$ content in the support to the total content, % | Molar ratio of alcohol to Group VIB metal | Molar ratio of carboxylic acid/amine to Group VIII metal | Proportion of pore volume with pore diameter of 2-6nm in the support to the total pore volume, % | Proportion of pore volume with pore diameter of 2-4nm in the support to the total pore volume, % | Position of $CO_2$ release peak in temperature-programmed oxidation test | Ratio of peak height |
|---|---|---|---|---|---|---|---|---|---|---|---|---|
| Comparative Example II-3 | $MoO_3$, 28.0 | NiO, 4.9 | 0.25 | 0 | 5.0 | 15 | - | 1:1 | 6.0 | 2 | 360°C | - |
| Comparative Example II-4 | $MoO_3$, 28.0 | NiO, 4.9 | 0.25 | 0 | 5.0 | 15 | - | 1:1 | 6.0 | 2 | 285°C and 380°C | 0.92:1 |

Table II-2 Hydrodesulphurization test results of Examples II-1 to II-10 and Comparative Examples II-1 to II-4

| Example No. | Sulfur content in product, ppm | Reaction hydrogen consumption,% |
| --- | --- | --- |
| Example II-1 | 6.5 | 0.60 |
| Example II-2 | 5.8 | 0.63 |
| Example II-3 | 7.0 | 0.58 |
| Example II-4 | 7.0 | 0.64 |
| Example II-5 | 8.9 | 0.60 |
| Example II-6 | 9.5 | 0.56 |
| Example II-7 | 14.5 | 0.65 |
| Example II-8 | 16.0 | 0.59 |
| Example II-9 | 17.6 | 0.52 |
| Example II-10 | 12.5 | 0.62 |
| Comparative Example II-1 | 20.5 | 0.73 |
| Comparative Example II-2 | 19.5 | 0.75 |
| Comparative Example II-3 | 25.6 | 0.73 |
| Comparative Example II-4 | 22.0 | 0.76 |

It can be seen from the test results in Table II-2 that, compared with the catalysts not in accordance with the present application, the catalysts of the second preferred embodiment according to the first aspect of the present application exhibit higher hydrodesulphurization activity and lower reaction hydrogen consumption.

Example III series

The Example III series further describe the hydrogenation catalyst grading method according to the third aspect of the present application and use thereof, wherein:

The hydrogenation performance of the catalyst was tested in a high-throughput hydrogenation reaction device. The device was provided with a reactor, which was divided into two beds arranged in an upper and lower manner, the first hydrogenation catalyst was loaded in the first reaction zone, and the second hydrogenation catalyst was loaded in the second reaction zone. First, the oxidized catalyst was converted into a sulphurized catalyst by a temperature-programmed sulphurization method. The sulphurization conditions were as follows: the sulphurization pressure was 6.4MPa, the sulphurized oil was kerosene containing 2 wt% of $CS_2$, the volume space velocity was $2h^{-1}$, the hydrogen-oil ratio was 300v/v, and the temperature was first kept constant at 230°C for 6h, and then raised to 360°C for sulphurization for 8h. The heating rate of each stage was 10°C/h. After sulphurization, the reaction raw material was switched to carry out the hydrodesulphurization activity test. In the distillate oil to be treated, the straight-run diesel content was 80 wt%, the catalytic diesel content was 20 wt%, the sulfur content was 10890 ppm, and the aromatic content was 37.4 wt%. The test conditions were: a pressure of 6.4MPa, a total volume space velocity of the reactor of $1.5h^{-1}$, a hydrogen-oil ratio of 300v/v, and a reaction temperature of 360°C. The reaction was carried out stably for 12 days, and the ratio of the change in the reaction rate constant after 12 days of reaction was calculated. Specifically, the ratio of the reaction rate constant after stabilization to the initial reaction rate constant was called as activity retention to express the stability of the catalyst. The higher the activity retention, the better the stability of the catalyst.

The sulfur mass fraction in the product was analyzed using a sulfur-nitrogen analyzer (produced by Thermo Fisher Scientific, model TN/TS3000), and the aromatic content was analyzed using near-infrared spectroscopy.

The calculation formula for the reaction hydrogen consumption was: $C_f/C_p \times H_p - H_f + 16 \times (S_f - C_f/C_p \times S_p) \times 10^{-6} + 5.67 \times (N_f - C_p/C_p \times N_p) \times 10^{-6}$, wherein $C_f$ and $C_p$ were the carbon contents of the raw material and the product, respectively; $H_f$ and $H_p$ were the H contents of the raw material and the product, respectively; $S_f$ and $S_p$ were the sulfur contents of the raw material and the product, respectively; and $N_f$ and $N_p$ were the nitrogen contents of the raw material and the product, respectively.

The reaction rate constant was calculated according to the following formula:

$$k = \text{LHSV} \times \frac{1}{n-1} \times (S_p^{1-n} - S_f^{1-n})$$

, LHSV was the reaction space velocity, n was the reaction order (n=1.2), $S_f$ and $S_p$ were the sulfur contents of the raw material and product, respectively.

Example III-1

First bed catalyst: the catalyst obtained in Example I-1 was used;
Second bed catalyst: the catalyst obtained in Example II-1 was used;
Performance testing of catalyst system:
The volume ratio of the first bed catalyst to the second bed catalyst was 1:1, and the reaction temperature of the two beds was 360°C. After the catalyst was sulphurized and tested for reaction, the sulfur content in the product was 8.9 ppm, the aromatic content was 27.0 wt%, and the reaction hydrogen consumption was 0.97%. The reaction conditions were kept stable, and the activity retention was 88.5% after 12 days of reaction.

Example I-2

First bed catalyst: the catalyst obtained in Example I-2 was used;
Second bed catalyst: the catalyst obtained in Example II-2 was used;
Performance testing of catalyst system:
The volume ratio of the first bed catalyst to the second bed catalyst was 3:1, and the reaction temperature of the two beds was 360°C. After the catalyst was sulphurized and tested for reaction, the sulfur content in the product was 6.3 ppm, the aromatic content was 25.6 wt%, and the reaction hydrogen consumption was 1.15 wt%. The reaction conditions were kept stable, and the activity retention after 12 days of reaction was 86.6%.

Example III-3

First bed catalyst: the catalyst obtained in Example I-3 was used;
Second bed catalyst: the catalyst obtained in Example II-3 was used;
Performance testing of catalyst system:
The volume ratio of the first bed catalyst to the second bed catalyst was 3:1, and the reaction temperature of the two beds was 360°C. After the catalyst was sulphurized and tested for reaction, the sulfur content in the product was 7.5 ppm, the aromatic content was 25.9 wt%, and the reaction hydrogen consumption was 1.1%. The reaction conditions were kept stable, and the activity retention after 12 days of reaction was 83.8%.

Example III-4

First bed catalyst: the catalyst obtained in Example I-4 was used;
Second bed catalyst: the catalyst obtained in Example II-4 was used;
Performance testing of catalyst system:
The volume ratio of the first bed catalyst to the second bed catalyst was 2:1, and the reaction temperature of the two beds was 360°C. After the catalyst was sulphurized and tested for reaction, the sulfur content in the product was 8.5 ppm, the aromatic content was 26.3 wt%, and the reaction hydrogen consumption was 1.05%. The reaction conditions were kept stable, and the activity retention after 12 days of reaction was 85%.

Example III-5

First bed catalyst: the catalyst obtained in Example I-1 was used;
Second bed catalyst: the catalyst obtained in Example II-1 was used;
Performance testing of catalyst system:
The volume ratio of the first bed catalyst to the second bed catalyst was 1:2, and the reaction temperature of the two beds was 360°C. After the catalyst was sulphurized and tested for reaction, the sulfur content in the product was 8.6 ppm, the aromatic content was 27.5 wt%, and the reaction hydrogen consumption was 0.92%. The reaction conditions were kept stable, and the activity retention was 88.6% after 12 days of reaction.

Example III-6

First bed catalyst: the catalyst obtained in Example I-5 was used;
Second bed catalyst: the catalyst obtained in Example II-6 was used;
Performance testing of catalyst system:
The volume ratio of the first bed catalyst to the second bed catalyst was 1:1, and the reaction temperature of the two beds was 360°C. After the catalyst was sulphurized and tested for reaction, the sulfur content in the product was 7.5 ppm, the aromatic content was 27.6 wt%, and the reaction hydrogen consumption was 0.95%. The reaction conditions were kept stable, and the activity retention after 12 days of reaction was 86.5%.

Example III-7

First bed catalyst: the catalyst obtained in Example I-1 was used;
Second bed catalyst: the catalyst obtained in Example II-7 was used;
Performance testing of catalyst system:
The volume ratio of the first bed catalyst to the second bed catalyst was 1:1, and the reaction temperature of the two beds was 360°C. After the catalyst was sulphurized and tested for reaction, the sulfur content in the product was 7.3 ppm, the aromatic content was 26.5 wt%, and the reaction hydrogen consumption was 1.05%. The reaction conditions were kept stable, and the activity retention after 12 days of reaction was 84.2%.

Example III-8

First bed catalyst: the catalyst obtained in Example I-9 was used;
Second bed catalyst: the catalyst obtained in Example II-1 was used;
Performance testing of catalyst system:
The volume ratio of the first bed catalyst to the second bed catalyst was 1:1, and the reaction temperature of the two beds was 360°C. After the catalyst was sulphurized and tested for reaction, the sulfur content in the product was 9.0 ppm, the aromatic content was 28.2 wt%, and the reaction hydrogen consumption was 0.88%. The reaction conditions were kept stable, and the activity retention after 12 days of reaction was 85.4%.

Example III-9

First bed catalyst: the catalyst prepared with reference to Example I-1, except that the molar ratio of citric acid to nickel element was 0.2:1, was used;
Second bed catalyst: the catalyst obtained in Example II-1 was used;
Performance testing of catalyst system:
The volume ratio of the first bed catalyst to the second bed catalyst was 1:1, and the reaction temperature of the two beds was 360°C. After the catalyst was sulphurized and tested for reaction, the sulfur content in the product was 10.5 ppm, the aromatic content was 28.5 wt%, and the reaction hydrogen consumption was 0.78%. The reaction conditions were kept stable, and the activity retention after 12 days of reaction was 87.2%.

Example III-10

First bed catalyst: the catalyst obtained in Example I-10 was used;

Second bed catalyst: the catalyst obtained in Example II-1 was used;
Performance testing of catalyst system:
The volume ratio of the first bed catalyst to the second bed catalyst was 1:1, and the reaction temperature of the two beds was 360°C. After the catalyst was sulphurized and tested for reaction, the sulfur content in the product was 8.7 ppm, the aromatic content was 26.9 wt%, and the reaction hydrogen consumption was 0.93%. The reaction conditions were kept stable, and the activity retention after 12 days of reaction was 83.5%.

Comparative Example III-1

First bed catalyst: the catalyst obtained in Comparative Example I-1 was used;
Second bed catalyst: the catalyst obtained in Comparative Example II-1 was used;
Performance testing of catalyst system:
The volume ratio of the first bed catalyst to the second bed catalyst was 1:1, and the reaction temperature of the two beds was 360°C. After the catalyst was sulphurized and tested for reaction, the sulfur content in the product was 26.0 ppm, the aromatic content was 29.5 wt%, and the reaction hydrogen consumption was 0.86%. The reaction conditions were kept stable, and the activity retention was 77.2% after 12 days of reaction.

Comparative Example III-2

First bed catalyst: the catalyst obtained in Comparative Example I-2 was used;
Second bed catalyst: the catalyst obtained in Comparative Example II-2 was used;
Performance testing of catalyst system:
The volume ratio of the first bed catalyst to the second bed catalyst was 3:1, and the reaction temperature of the two beds was 360°C. After the catalyst was sulphurized and tested for reaction, the sulfur content in the product was 28.5 ppm, the aromatic content was 29.8 wt%, and the reaction hydrogen consumption was 0.84%. The reaction conditions were kept stable, and the activity retention was 76.0% after 12 days of reaction.

Comparative Example III-3

First bed catalyst: the catalyst obtained in Comparative Example I-3 was used;
Second bed catalyst: the catalyst obtained in Comparative Example II-3 was used;
Performance testing of catalyst system:
The volume ratio of the first bed catalyst to the second bed catalyst was 2:1, and the reaction temperature of the two beds was 360°C. After the catalyst was sulphurized and tested for reaction, the sulfur content in the product was 35 ppm, the aromatic content was 27.5 wt%, and the reaction hydrogen consumption was 1.03%. The reaction conditions were kept stable, and the activity retention after 12 days of reaction was 75.4%.

Comparative Example III-4

The test was conducted with reference to Example III-1, except that the volume ratio of the first bed catalyst to the second bed catalyst was 1:8. After the catalyst was sulphurized and tested for reaction, the sulfur content in the product was 27.0 ppm, the aromatic content was 30.5 wt%, and the reaction hydrogen consumption was 0.73%. The reaction conditions were kept stable, and the activity retention after 12 days of reaction was 79.5%.

Table III-1 Operating conditions and test results of Examples III-1 to III-10 and Comparative Examples III-1 to III-4

| Example No. | First bed catalyst source | Second bed catalyst source | Catalyst volume ratio | Sulfur content in the product, ppm | Aromatic content in the product, wt% | Reaction hydrogen consumption, % | Activity retention after 12 days of reaction, % |
|---|---|---|---|---|---|---|---|
| Example III-1 | Example I-1 | Example II-1 | 1:1 | 8.9 | 27.0 | 0.97 | 88.5 |

(continued)

| Example No. | First bed catalyst source | Second bed catalyst source | Catalyst volume ratio | Sulfur content in the product, ppm | Aromatic content in the product, wt% | Reaction hydrogen consumption, % | Activity retention after 12 days of reaction, % |
|---|---|---|---|---|---|---|---|
| Example III-2 | Example I-2 | Example II-2 | 3:1 | 6.3 | 25.6 | 1.15 | 86.6 |
| Example III-3 | Example I-3 | Example II-3 | 3:1 | 7.5 | 25.9 | 1.1 | 83.8 |
| Example III-4 | Example I-4 | Example II-4 | 2:1 | 8.5 | 26.3 | 1.05 | 85 |
| Example III-5 | Example I-1 | Example II-1 | 1:2 | 8.6 | 27.5 | 0.92 | 88.6 |
| Example III-6 | Example I-5 | Example II-6 | 1:1 | 7.5 | 27.6 | 0.95 | 86.5 |
| Example III-7 | Example I-1 | Example II-7 | 1:1 | 7.3 | 26.5 | 1.05 | 84.2 |
| Example III-8 | Example I-9 | Example II-1 | 1:1 | 9.0 | 28.2 | 0.88 | 85.4 |
| Example III-9 | Catalyst similar to Example I-1 * | Example II-1 | 1:1 | 10.5 | 28.5 | 0.78 | 87.2 |
| Example III-10 | Example I-10 | Example II-1 | 1:1 | 8.7 | 26.9 | 0.93 | 83.5 |
| Comparative Example III-1 | Comparative Example I-1 | Comparative Example II-1 | 1:1 | 26.0 | 29.5 | 0.86 | 77.2 |
| Comparative Example III-2 | Comparative Example I-2 | Comparative Example II-2 | 3:1 | 28.5 | 29.8 | 0.84 | 76.0 |
| Comparative Example III-3 | Comparative Example I-3 | Comparative Example II-3 | 2:1 | 35 | 27.5 | 1.03 | 75.4 |
| Comparative Example III-4 | Example I-1 | Example II-1 | 1:8 | 27.0 | 30.5 | 0.73 | 79.5 |

\* The catalyst prepared with reference to Example I-1, except that the molar ratio of citric acid to nickel element was 0.2:1.

It can be seen from the test results in Table III-1 that the hydrogenation catalyst grading method of the present application can achieve good desulphurization and dearomatization effects as well as lower reaction hydrogen consumption by grading two specific hydrogenation catalysts in a specific manner and ratio.

The preferred embodiments of the present application are described in detail above; however, the present application is not limited to the specific details in the above embodiments. Within the technical concept of the present application, a variety of simple modifications may be made to the technical solution of the present application, and these simple modifications all fall within the protection scope of the present application.

It should also be noted that the various specific technical features described in the above specific embodiments may be combined in any suitable manner without contradiction. In order to avoid unnecessary repetition, the present application will not further describe various possible combinations.

In addition, the various different embodiments of the present application may be arbitrarily combined, as long as they do not violate the concept of the present application, and they should also be regarded as the content invented by the present application.

**Claims**

1. A hydrogenation catalyst comprising a support and a hydrogenation active metal component, a phosphorus component and an organic complexing component supported on the support, wherein the hydrogenation active metal component comprises a Group VIII metal and a Group VIB metal, the organic complexing component comprises an alcohol, and further comprises a carboxylic acid and/or an amine, and the catalyst has a spectrum obtained by a temperature-programmed oxidation test exhibiting at least two $CO_2$ release peaks, wherein the temperature corresponding to the first release peak is in the range of 200-300°C, preferably 220-280°C, the temperature corresponding to the second release peak is in the range of 300-400°C, preferably 320-380°C, and the ratio of the peak height of the first release peak to the peak height of the second release peak is in the range of 0.5-5:1, preferably 0.7-3.5:1.

2. The catalyst according to claim 1, wherein, based on the dry weight of the catalyst and calculated as oxides, the catalyst has a content of the Group VIII metal in the range of 1-15 wt%, preferably 2-12 wt%, more preferably 3-8 wt%, a content of the Group VIB metal in the range of 12-50 wt%, preferably 15-45 wt%, more preferably 18-40 wt%, and a content of phosphorus, calculated as $P_2O_5$, in the range of 3-10 wt%, preferably 3.5-9 wt%, more preferably 4-8 wt%, and

the molar ratio of the alcohol to the Group VIB metal is in the range of 0.2-4:1, preferably 0.3-3.5:1, and the molar ratio of the total amount of the carboxylic acid and the amine to the Group VIII metal is in the range of 0.1-4:1, preferably 0.2-3.5:1;
preferably, in the catalyst, the atomic ratio of the Group VIII metal to the total amount of the Group VIII metal and the Group VIB metal is in the range of 0.1-0.5:1, more preferably 0.2-0.35:1.

3. The catalyst according to claim 1 or 2, wherein:

the Group VIII metal is selected from iron, cobalt, nickel, ruthenium, rhodium, palladium, osmium, or any combinations thereof,
the metal element of Group VIB is selected from chromium, molybdenum, tungsten, or any combinations thereof,
the alcohol is selected from butanol, isobutanol, pentanol, heptanol, ethylene glycol, glycerol, tetramethylene glycol, polyethylene glycol, polyglycerol, pentaerythritol, xylitol, trimethylolethane, or any combinations thereof, preferably selected from butanol, glycerol, propanol, ethylene glycol, or any combinations thereof;
the carboxylic acid is selected from acetic acid, propionic acid, citric acid, caprylic acid, adipic acid, malonic acid, succinic acid, maleic acid, valeric acid, caproic acid, capric acid, benzoic acid, phenylacetic acid, phthalic acid, terephthalic acid, octadecanoic acid, tartaric acid, or any combinations thereof, preferably selected from citric acid, acetic acid, or any combinations thereof; and/or
the amine is selected from ethylenediamine, ethylenediaminetetraacetic acid, ethanolamine, triethanolamine, cyclohexanediaminetetraacetic acid, or any combinations thereof.

4. The catalyst according to any one of claims 1-3, wherein the support is the phosphorus-containing alumina support, and the phosphorus content in the alumina support, calculated as $P_2O_5$, accounts for 10-40 wt%, more preferably 20-30 wt%, of the total phosphorus content in the catalyst.

5. The catalyst according to any one of claims 1-4, wherein the catalyst has one or more of the following characteristics:

the pore volume of pores with a pore diameter in the range of 100-300 nm accounts for 5-20%, preferably 8-15% of the total pore volume of the catalyst;
the pore volume of pores with a pore diameter in the range of 2-6 nm accounts for no more than 10%, preferably no more than 8%, of the total pore volume of the catalyst; and
the pore volume of pores with a pore diameter in the range of 2-4 nm accounts for no more than 4%, preferably no more than 2%, of the total pore volume of the catalyst.

6. The catalyst according to any one of claims 1-5, wherein the Group VIII metal is nickel or a combination of nickel with at least one of iron, ruthenium and osmium, and the atomic ratio of nickel to the total amount of the Group VIII metal(s) is in the range of 0.8-1:1, preferably 0.85-1:1;

preferably, in the spectrum obtained by the temperature-programmed oxidation test of the catalyst, the temperature corresponding to the first release peak is in the range of 210-280°C, the temperature corresponding to the second release peak is in the range of 320-380°C, and the ratio of the peak height of the first release peak to the peak height of the second release peak is in the range of 0.5-4:1,
further preferably, in the spectrum obtained by the temperature-programmed oxidation test of the catalyst, the temperature corresponding to the first release peak is in the range of 230-260°C, the temperature corresponding to the second release peak is in the range of 320-360°C, and the ratio of the peak height of the first release peak to the peak height of the second release peak is in the range of 0.7-3.5:1,
more preferably, in the catalyst, the molar ratio of the alcohol to the Group VIB metal is in the range of 0.2-4:1, preferably 0.5-2.5:1, more preferably 0.6-2.2:1, and the molar ratio of the total amount of the carboxylic acid and the amine to the Group VIII metal is in the range of 0.3-1.5:1, preferably 0.4-1.2:1, more preferably 0.5-1.1:1.

7. The catalyst according to any one of claims 1-5, wherein the Group VIII metal is cobalt or a combination of cobalt with one or more other Group VIII metal(s), and the atomic ratio of cobalt to the total amount of Group VIII metal(s) is in the range of 0.8-1:1, preferably 0.85-1:1;

preferably, in the spectrum obtained by the temperature-programmed oxidation test of the catalyst, the ratio of the peak height of the first release peak to the peak height of the second release peak is in the range of 1-5:1; further preferably, in the spectrum obtained by the temperature-programmed oxidation test of the catalyst, the temperature corresponding to the first release peak is in the range of 220-280°C, the temperature corresponding to the second release peak is in the range of 320-380°C, and the ratio of the peak height of the first release peak to the peak height of the second release peak is in the range of 1.5-3:1, more preferably, in the catalyst, the molar ratio of the alcohol to the Group VIB metal is in the range of 0.2-4:1, preferably 0.3-3.5:1, more preferably 0.8-2.5:1, and the molar ratio of the total amount of the carboxylic acid and the amine to the Group VIII metal is in the range of 0.1-4:1, preferably 0.2-3.5:1, more preferably 0.5-3:1.

8. A method for preparing the hydrogenation catalyst according to any one of claims 1-7, comprising steps of:

1) providing a catalyst support; and
2) supporting a Group VIII metal precursor, a Group VIB metal precursor, a phosphorus-containing compound and the organic complexing component on the catalyst support by impregnation, followed by drying to obtain the hydrogenation catalyst,

preferably, the drying is carried out under conditions including: a temperature of 60-200°C and a time of 2-10 h.

9. The method according to claim 8, wherein the impregnation in step 2) comprises impregnating the catalyst support with an impregnation solution comprising the Group VIII metal precursor, the Group VIB metal precursor, the phosphorus-containing compound, and the organic complexing component;
preferably, the impregnation solution is obtained by respectively adding the Group VIII metal precursor, the Group VIB metal precursor and the organic complexing component into an aqueous solution of the phosphorus-containing compound.

10. The method according to claim 9 or 10, wherein the catalyst support is the phosphorus-containing alumina support, and the phosphorus content in the alumina support, calculated as $P_2O_5$, accounts for 10-40 wt%, more preferably 20-30 wt%, of the total phosphorus content in the obtained hydrogenation catalyst.

preferably, the step 1) further comprises molding and calcining phosphorus-containing pseudo-boehmite powders to obtain the phosphorus-containing alumina support, wherein the phosphorus-containing pseudo-boehmite powders are preferably prepared by introducing phosphoric acid during the preparation of pseudo-boehmite powders;
more preferably, the sodium oxide content in the phosphorus-containing pseudo-boehmite powders is in the range of no more than 0.08 wt%, more preferably no more than 0.05 wt%.

11. A method for grading hydrogenation catalysts, comprising: sequentially loading a first hydrogenation catalyst and a second hydrogenation catalyst along a direction of material flow, wherein the first hydrogenation catalyst is the catalyst according to claim 6, and the second hydrogenation catalyst is the catalyst according to claim 7, wherein the loading volume ratio of the first hydrogenation catalyst to the second hydrogenation catalyst is from 1:2 to 5:1, preferably from 1: 1 to 4: 1.

12. A method for hydrofining distillate oil, comprising a step of contacting the distillate oil with the hydrogenation catalyst according to any one of claims 1-7 in the presence of hydrogen to carry out a reaction, wherein the hydrogenation catalyst is subjected to sulphurization treatment before use, preferably the hydrofining is selected from hydrodesulphurization, hydrodenitrogenation or a combination thereof,
preferably, the sulphurization treatment is carried out by contacting the hydrogenation catalyst with a sulphurizing oil carrying a sulphurizing agent, and the sulphurization treatment is carried out under conditions preferably including: a heating rate of 5-60°C/h, a sulphurization temperature of 280-420°C, a sulphurization time of 8-48h, a sulphurization pressure of 0.1-15MPa, a volume space velocity of the sulphurizing oil of 0.5-20h$^{-1}$, and a hydrogen-to-oil volume ratio of 100-2000:1.

13. The method according to claim 12, wherein the hydrofining is hydrodenitrogenation, and the hydrogenation catalyst is the catalyst according to claim 6,

preferably, the reaction is carried out under conditions including: a temperature of 320-400°C, a pressure of 6-20MPa, a volume space velocity of $0.5\text{-}3h^{-1}$, and a hydrogen-to-oil volume ratio of 300-1500:1;
further preferably, the proportion of secondary processed diesel in the distillate oil is in the range of 20-70 wt%;
more preferably, the distillate oil contains 45-75 wt% of straight-run diesel, 25-55 wt% of catalytic diesel, and 50-2000 ppm of nitrogen.

14. The method according to claim 12, wherein the hydrofining is hydrodesulphurization, and the hydrogenation catalyst is the catalyst according to claim 7,

preferably, the reaction is carried out under conditions including: a temperature of 320-400°C, a pressure of 3-8MPa, a volume space velocity of $0.5\text{-}3h^{-1}$, and a hydrogen-to-oil volume ratio of 100-500:1,
more preferably, the proportion of secondary processed diesel in the distillate oil is in the range of 0-15 wt%.

15. The method according to claim 12, comprising, in the presence of hydrogen, allowing the distillate oil to first pass through a first reaction zone loaded with the catalyst according to claim 6 for a hydrodenitrogenation reaction, and then to pass through a second reaction zone loaded with the catalyst according to claim 7 for a hydrodesulphurization reaction,

preferably, each of the reactions in the first reaction zone and the second reaction zone is independently carried out under conditions including: a temperature of 300-450°C, a pressure of 3-20MPa, a volume space velocity of $0.5\text{-}3h^{-1}$, and a hydrogen-to-oil volume ratio of 100-2000:1;
further preferably, the proportion of secondary processed diesel in the distillate oil is in the range of 10-30 wt%;
more preferably, the distillate oil contains 75-85 wt% of straight-run diesel, 15-25 wt% of catalytic diesel, 2000-18000 ppm of sulfur, and 15-45 wt% of aromatics.

16. A hydrogenation catalyst graded system, comprising a first hydrogenation catalyst and a second hydrogenation catalyst, wherein the first hydrogenation catalyst is the catalyst according to claim 6, the second hydrogenation catalyst is the catalyst according to claim 7, and the volume ratio of the first hydrogenation catalyst to the second hydrogenation catalyst is from 1:2 to 5:1, preferably from 1:1 to 4:1.

**FIG. 1**

**FIG. 2**

**FIG. 3**

# INTERNATIONAL SEARCH REPORT

| International application No. |
|---|
| **PCT/CN2023/106677** |

## A. CLASSIFICATION OF SUBJECT MATTER

C10G45/08(2006.01)i; C10G45/06(2006.01)i; B01J37/08(2006.01)i; B01J27/188(2006.01)i

According to International Patent Classification (IPC) or to both national classification and IPC

## B. FIELDS SEARCHED

Minimum documentation searched (classification system followed by classification symbols)

IPC: C10G, B01J

Documentation searched other than minimum documentation to the extent that such documents are included in the fields searched

Electronic data base consulted during the international search (name of data base and, where practicable, search terms used)

CNTXT, ENTXT, ENTXTC, Baidu, 万方, WANFANG, CNKI中国期刊全文数据库, CJFD, ISI web of science: 加氢催化剂, 金属, 磷, 络合, VIII族, VIB族, 醇, 羧酸, 胺, 释放峰, 铁, 钴, 镍, 钌, 铑, 钯, 铱, 铬, 钼, 钨, 乙酸, 丙酸, 柠檬酸, 辛酸, 己二酸, 丙二酸, 丁二酸, 马来酸, 戊酸, 己酸, 癸酸, 苯甲酸, 苯乙酸, 邻苯二甲酸, 对苯二甲酸, 十八酸, 酒石酸, 乙二胺, 乙二胺四乙酸, 乙醇胺, 三乙醇胺, 环己二胺四乙酸, hydrogenation catalyst, hydro-fining catalyst, alcohol, carboxylic acid, group VIII, group VIB, phosphorus, exothermic peak

## C. DOCUMENTS CONSIDERED TO BE RELEVANT

| Category* | Citation of document, with indication, where appropriate, of the relevant passages | Relevant to claim No. |
|---|---|---|
| Y | CN 109718866 A (CHINA PETROCHEMICAL CO., LTD. et al.) 07 May 2019 (2019-05-07) claims 1-26 | 1-16 |
| Y | CN 105985799 A (CHINA PETROCHEMICAL CO., LTD. et al.) 05 October 2016 (2016-10-05) claim 4 | 1-16 |
| Y | CN 105983451 A (CHINA PETROCHEMICAL CO., LTD. et al.) 05 October 2016 (2016-10-05) claim 4 | 1-16 |
| Y | CN 109718858 A (CHINA PETROCHEMICAL CO., LTD. et al.) 07 May 2019 (2019-05-07) claims 1-21 | 1-16 |
| Y | CN 109718818 A (CHINA PETROCHEMICAL CO., LTD. et al.) 07 May 2019 (2019-05-07) claims 1-21 | 1-16 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 November 2023** | **08 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/106677**

### C. DOCUMENTS CONSIDERED TO BE RELEVANT

| Category* | Citation of document, with indication, where appropriate, of the relevant passages | Relevant to claim No. |
|---|---|---|
| Y | CN 109718857 A (CHINA PETROCHEMICAL CO., LTD. et al.) 07 May 2019 (2019-05-07) claims 1-19 | 1-16 |
| Y | CN 109718816 A (CHINA PETROCHEMICAL CO., LTD. et al.) 07 May 2019 (2019-05-07) claims 1-19 | 1-16 |
| A | US 5494875 A (COSMO RESEARCH INSTITUTE et al.) 27 February 1996 (1996-02-27) description, columns 2-7 | 1-16 |

Form PCT/ISA/210 (second sheet) (July 2022)

**INTERNATIONAL SEARCH REPORT**
**Information on patent family members**

International application No.

**PCT/CN2023/106677**

| Patent document<br>cited in search report | | | Publication date<br>(day/month/year) | Patent family member(s) | | | Publication date<br>(day/month/year) |
|---|---|---|---|---|---|---|---|
| CN | 109718866 | A | 07 May 2019 | CN | 109718866 | B | 28 July 2020 |
| CN | 105985799 | A | 05 October 2016 | CN | 105985799 | B | 03 November 2017 |
| CN | 105983451 | A | 05 October 2016 | CN | 105983451 | B | 20 March 2018 |
| CN | 109718858 | A | 07 May 2019 | CN | 109718858 | B | 28 July 2020 |
| CN | 109718818 | A | 07 May 2019 | CN | 109718818 | B | 28 July 2020 |
| CN | 109718857 | A | 07 May 2019 | CN | 109718857 | B | 28 July 2020 |
| CN | 109718816 | A | 07 May 2019 | CN | 109718816 | B | 28 July 2020 |
| US | 5494875 | A | 27 February 1996 | JPH | 0631164 | A | 08 February 1994 |
| | | | | JP | 2996423 | B2 | 27 December 1999 |
| | | | | CA | 2100379 | A1 | 15 January 1994 |
| | | | | CA | 2100379 | C | 18 November 2003 |
| | | | | NL | 9301235 | A | 01 February 1994 |
| | | | | NL | 195002 | C | 15 May 2003 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 202010395989 A
- WO 201610388357 A
- WO 202011116861 A
- WO 201910297435X A
- WO 201810965384 A
- WO 201811455219 A